(19) Europäisches Patentamt
European Patent Office
Office européen des brevets

(11) **EP 2 549 692 A1**

(12) **EUROPEAN PATENT APPLICATION**
published in accordance with Art. 153(4) EPC

(43) Date of publication:
**23.01.2013  Bulletin 2013/04**

(21) Application number: **11756352.8**

(22) Date of filing: **16.03.2011**

(51) Int Cl.:
**H04L 12/56** *(0000.00)*

(86) International application number:
**PCT/JP2011/056200**

(87) International publication number:
**WO 2011/115168 (22.09.2011 Gazette 2011/38)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **17.03.2010  JP 2010060898**

(71) Applicant: **NEC Corporation**
**Tokyo 108-8001 (JP)**

(72) Inventor: **CHIBA, Yasunobu**
**Tokyo 108-8001 (JP)**

(74) Representative: **Robson, Aidan John**
**Reddie & Grose LLP**
**16 Theobalds Road**
**London WC1X 8PL (GB)**

(54) **COMMUNICATION SYSTEM, NODE, CONTROL SERVER, COMMUNICATION METHOD AND PROGRAM**

(57)    A communication system comprises a node that receives a packet with a process rule sequence including a plurality of process rules that should be set in a process rule storage unit of a node on a data transfer network, and sets a process rule in the process rule storage unit of own node according to the process rule sequence. The communication system is capable of reliably and quickly setting a process rule (flow entry).

FIG. 1

EP 2 549 692 A1

**Description**

TECHNICAL FIELD

(Reference to Related Application)

The present invention is based upon and claims the benefit of the priority of Japanese patent application No. 2010-060898 filed on March 17, 2010, the disclosure of which is incorporated herein in its entirety by reference thereto. The present invention relates to a communication system, node, control server, communication method and program, and particularly to a communication system, node, control server, communication method and program realizing communication by transferring a packet using a node disposed in a network.

BACKGROUND ART

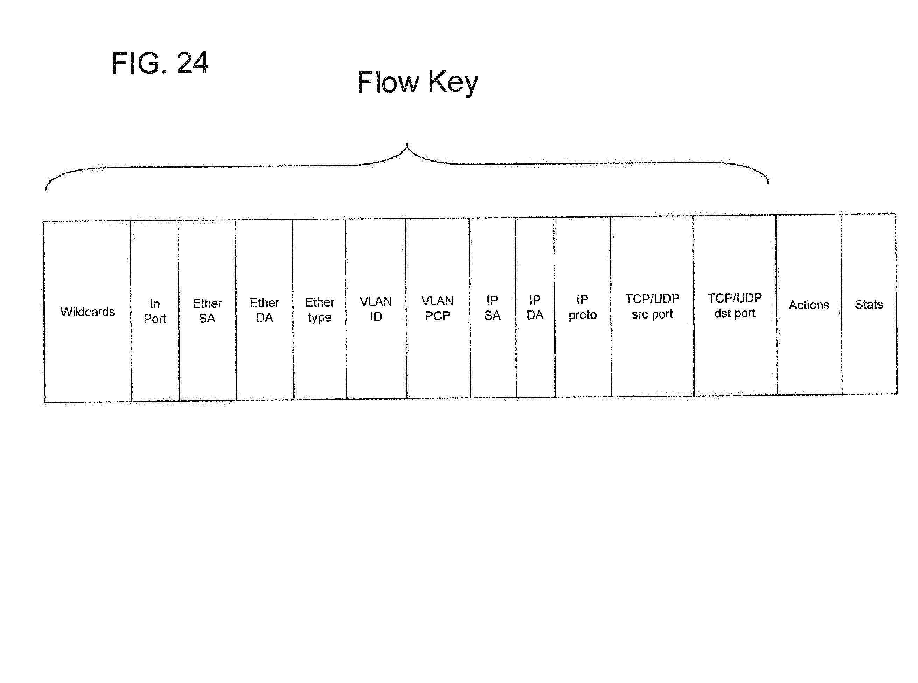

As described in Non-Patent Documents 1 and 2, a technology called OpenFlow has been proposed in recent years. OpenFlow treats communication as an end-to-end flow, and performs path control, failure recovery, load balancing, and optimization for each flow. An OpenFlow switch that functions as a transfer node comprises a secure channel for communicating with an OpenFlow controller and operates according to a flow table suitably added or rewritten by the OpenFlow controller. In the flow table, a set of rules (Flow Key; matching keys) matched against a packet header, actions (Actions) defining the contents of processes, and flow statistics (Stats) are defined for each flow (refer to FIG. 24).
FIG. 25 show examples of the names and contents of actions defined in Non-Patent Document 2. OUTPUT is an action that outputs a packet to a specified port (interface). Actions from SET_VLAN_VID to SET_TP_DST correct fields of a packet header.
For instance, upon receiving a first packet, the OpenFlow switch searches for an entry having rule(s) (FlowKey) that fits the header information of the received packet in the flow table. When an entry fitting the received packet is found as a result of the search, the OpenFlow switch performs the process contents written in the action fields of the entry. Meanwhile, when no entry fitting the receive packet is found as a result of the search, the OpenFlow switch transfers the received packet to the OpenFlow controller via the secure channel, requests the OpenFlow controller to determine a path of the packet based on the source and the destination of the received packet, and updates the flow table after receiving a flow entry realizing this operation.
[Non-Patent Document 1]
McKeown, Nick et al., "OpenFlow: Enabling Innovation in Campus Networks," [online], [searched on February 26, 2010], Internet < URL : http://www.openflowswitch.org//documents/openflow-wp-latest.pdf>
[Non-Patent Document 2]
"OpenFlow Switch Specification" Version 0.9.0. (Wire Protocol 0x98) [searched on February 26, 2010], Internet <URL : http://www.openflowswitch.org/documents/openflow-spec-v0.9.0.pdf>

DISCLOSURE OF THE INVENTION

PROBLEMS TO BE SOLVED BY THE INVENTION

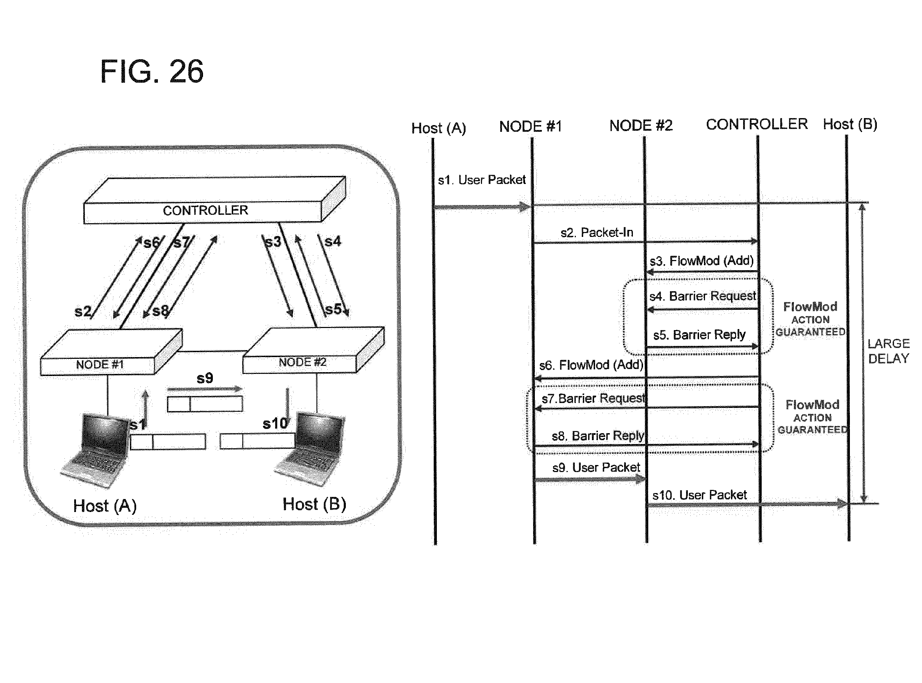

The following analysis is given by the present inventor. Having received the request for determining the path of the received packet (refer to s2 Packet-In in FIG. 26), the OpenFlow controller determines the transfer path of the received packet. In order to transfer the received packet and a subsequent packet belonging to the same flow to Host (B), flow entries must be set for all the OpenFlow switches (Node #1 and Node #2 in FIG. 26) on the transfer path. This requires a certain amount of time before the transfer of user packets is initiated.
Further, when the flow entries are set using the OpenFlow protocol (refer to "4.6 Flow Table Modification Messages" in Non-Patent Document 2), the setting of the flow entries may not be performed on time for some OpenFlow switches due to a delay occurring in the communication between the OpenFlow controller and the OpenFlow switches. When this happens, the OpenFlow switches on the path determine that the packet of the same flow does not match the flow entries on the flow table and request the OpenFlow controller to generate flow entries for the received packet. Further, due to the delay in the setting of the flow entries, the packet of the same flow may accidentally match an unintended flow entry on the flow table at an OpenFlow switch on the path and an unintended action may be performed on the packet of the same flow.
As shown in FIG. 26, one of solutions to the above problems is to have the (OpenFlow) controller transmit flow entries to Node #1 and Node #2 (refer to s3 and s6 FlowMod (Add) in FIG. 26) and transmit a Barrier Request defined in the OpenFlow protocol (refer to "5.3.6 Barrier Message" in Non-Patent Document 2 for s4 Barrier Request; Barrier Request/reply in FIG. 26). A node that has received the Barrier Request replies the contents of the processes executed before the reception of the Barrier Request as "Barrier Reply" (s5 in FIG. 26). As a result, the (OpenFlow) controller is able to confirm whether or not flow entries are set correctly. In this method, however, the controller has to send/receive Barrier Requests/Replies to/from all the nodes setting flow entries and the time it takes to transmit a user packet (between s1 (User Packet) and s10 (User Packet) in FIG. 26) becomes even longer.

Another method is to use a Stats Request/Reply instead of the Barrier Request/Reply and confirm whether or not each node has a corresponding entry, but the controller has to interact with all the nodes setting flow entries to confirm whether or not a corresponding flow entry is set in this method as in the case using the Barrier Request/Reply, and the time it takes to transmit a user packet (between s1 (User Packet) and s10 (User Packet) in FIG. 26) becomes longer.

The present invention solves the above problems, and it is an object thereof to provide a communication system, node, control server, communication method and program capable of reliably and quickly setting process rules (flow entries).

## MEANS TO SOLVE THE PROBLEMS

According to a first aspect of the present invention, there is provided a communication system comprising a node that receives a packet with a process rule sequence including a plurality of process rules that should be set in a process rule storage unit of a node on a data transfer network, extracts a process rule that should be set in a process rule storage unit of own node from the process rule sequence, and sets the process rule therein.

According to a second aspect of the present invention, there is provided a node disposed on a data transfer network, receiving a packet with a process rule sequence including a plurality of process rules that should be set in a process rule storage unit of a node on the data transfer network, extracting a process rule that should be set in a process rule storage unit of own node from the process rule sequence, and setting the process rule therein.

According to a third aspect of the present invention, there is provided a control server, that generates a process rule sequence including a plurality of process rules that should be set in a process rule storage unit of a node on a data transfer network based on information included in an input packet received from a node disposed on the data transfer network, and transmits a packet with the process rule sequence to the node transmitting the input packet.

According to a fourth aspect of the present invention, there is provided a communication method comprising: inserting in an input packet a process rule sequence including a plurality of process rules that should be set in a process rule storage unit of a node on a data transfer network; and by the node on the data transfer network, extracting a process rule that should be set in a process rule storage unit of own node from the process rule sequence included in the input packet and setting the process rule therein. The present method is tied to a particular machine, i.e., a transfer node constituting a data transfer network.

According to a fifth aspect of the present invention, there is provided a program causing a computer that constitutes a node disposed on a data transfer network to execute: receiving a packet with a process rule sequence including a plurality of process rules that should be set in a process rule storage unit of a node on the data transfer network and extracting a process rule that should be set in a process rule storage unit of own node from the process rule sequence; and setting the extracted process rule in a process rule storage unit of own node. Further, this program can be stored in a computer-readable storage medium. In other words, the present invention can be embodied as a computer program product. Further, the process steps that the program causes the node to execute can be understood as a communication method.

According to a sixth aspect of the present invention, there is provided a program causing a computer that constitutes a controller controlling a node disposed on a data transfer network to execute: generating a process rule sequence including a plurality of process rules that should be set in a process rule storage unit of a node on the data transfer network based on information included in an input packet received from a node disposed on the data transfer network; and transmitting a packet including the process rule sequence to the node transmitting the input packet. Further, this program can be stored in a computer-readable storage medium. In other words, the present invention can be embodied as a computer program product. Further, the process steps that the program causes the controller to execute can be understood as a communication method.

## EFFECT OF THE INVENTION

According to the present invention, it becomes possible to have a node disposed on a data transfer network set a flow entry reliably and quickly.

BRIEF DESCRIPTION OF THE DRAWINGS

FIG. 1 is a drawing illustrating a configuration of a communication system of a first exemplary embodiment of the present invention.

FIG. 2 is a block diagram showing a configuration of a node of the first exemplary embodiment of the present invention.

FIG. 3 is a block diagram showing a configuration of a controller of the first exemplary embodiment of the present invention.

FIG. 4 is a drawing for explaining a configuration of a packet with a process rule sequence.

FIG. 5 is a drawing showing a configuration example of the process rule sequence header in FIG. 4.

FIG. 6 is a flowchart showing an operation of a node of the first exemplary embodiment of the present invention.

FIG. 7 is a flowchart showing an operation of a controller of the first exemplary embodiment of the present invention.

FIG. 8 shows a reference diagram and a sequence diagram for explaining a sequence of events in a communication system of the first exemplary embodiment of the present invention.

FIG. 9 shows a reference diagram and a sequence diagram for explaining a sequence of events in a communication system of a second exemplary embodiment of the present invention.

FIG. 10 is a drawing showing a configuration of a packet with a process rule sequence that a controller and a node of the second exemplary embodiment of the present invention send to a next hop.

FIG. 11 is a drawing showing a configuration example of the process rule sequence header in FIG. 10.

FIG. 12 is a flowchart showing an operation of a controller of the second exemplary embodiment of the present invention.

FIG. 13 is a flowchart showing an operation of a node of the second exemplary embodiment of the present invention.

FIG. 14 shows a reference diagram and a sequence diagram for explaining a sequence of events in a communication system of a third exemplary embodiment of the present invention.

FIG. 15 is a diagram showing a configuration of a node of the third exemplary embodiment of the present invention.

FIG. 16 is a flowchart showing an operation of a node of the third exemplary embodiment of the present invention.

FIG. 17 is a block diagram illustrating a configuration of a node of a fourth exemplary embodiment of the present invention.

FIG. 18 is a block diagram illustrating a configuration of a controller of the fourth exemplary embodiment of the present invention.

FIG. 19 is a drawing showing a configuration example of a process rule sequence header with a signature used in the fourth exemplary embodiment of the present invention.

FIG. 20 is a flowchart showing an operation of a controller of the fourth exemplary embodiment of the present invention.

FIG. 21 is a flowchart showing an operation of a node of the fourth exemplary embodiment of the present invention.

FIG. 22 is a reference diagram for explaining a sequence of events in a communication system of a fifth exemplary embodiment of the present invention.

FIG. 23 is a sequence diagram corresponding to FIG. 22.

FIG. 24 is a drawing showing a configuration of an entry set in a flow table of a node of the first to the fifth exemplary embodiments of the present invention.

FIG. 25 is a drawing showing action names and action contents described in Non-Patent Document 2.

FIG. 26 shows a reference diagram and a sequence diagram for explaining a sequence of events for reliably setting a flow entry using the OpenFlow protocol described in Non-Patent Document 2.

PREFERRED MODES FOR CARRYING OUT THE INVENTION

First, a summary of the present invention will be given. Reference symbols added in the drawings in this summary are given in order to facilitate understanding and not to limit the present invention to the illustrated modes. A node of a communication system of the present invention has a function of extracting a process rule that should be set in a process rule storage unit of own node from a process rule sequence included in a packet and setting it in the process rule storage unit. The node refers to contents including the process rule set as above in the process rule storage unit, searches for a process rule fitting a received packet, and executes a process content (packet rewrite, packet transfer, packet discard, etc.) defined in the searched process rule.

The process rule sequence may be configured by process rules that should be set in the process rule storage unit of any node on a data transfer network. As a method used by an individual node to specify a process rule that should be set in the process rule storage unit thereof from the process rule sequence, a method in which a node identifier is added to each process rule, a method in which the position of a process rule in the process rule sequence is assigned to an individual node, and a method in which each node extracts a first or last process rule according to the order of process rules in the process rule sequence may be employed.

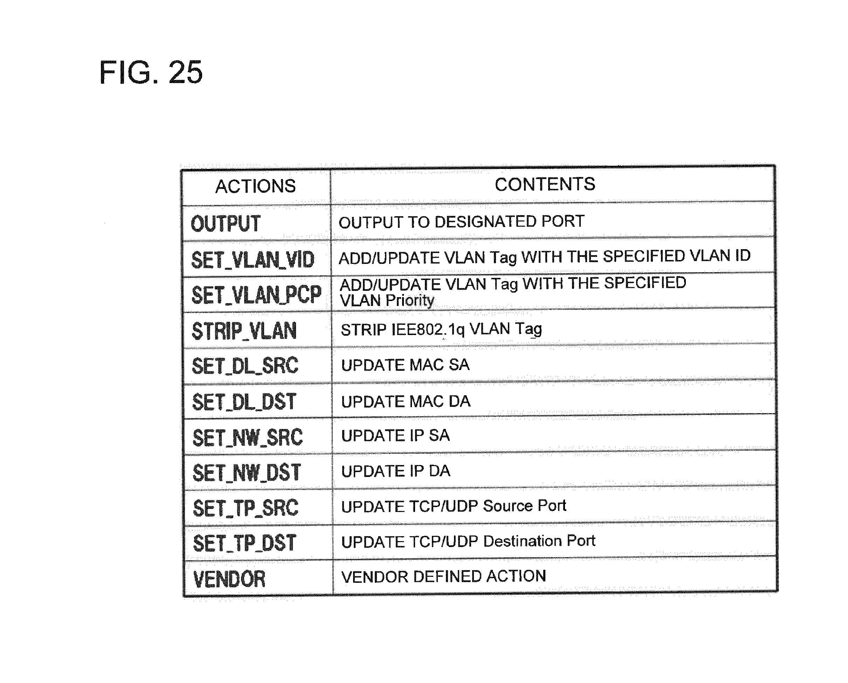

The process rule and the process rule storage unit correspond to the flow entry and the flow table, respectively, in the OpenFlow technology described above, but other modes may be taken. The system should only be able to search for a process rule fitting a received packet and execute processing such as rewriting a header and outputting the packet to a designated port (refer to FIG. 25 and "3.3 Actions" and "Table 5" on pp. 4-6 in Non-Patent Document 2).

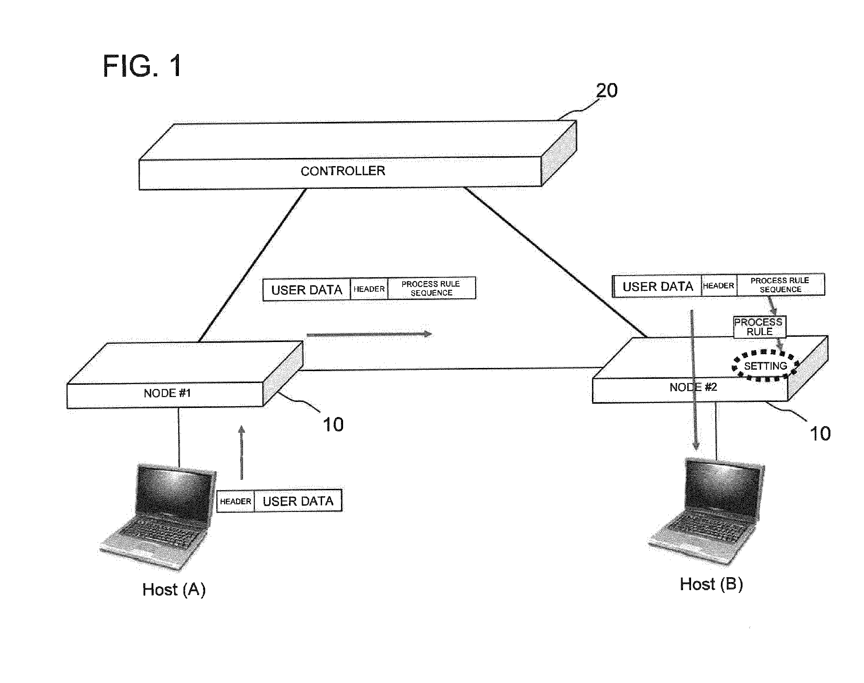

Further, a controller (20 in FIG. 1) may generate a packet including the process rule sequence and transmit it to Node #1 (10 in FIG. 1) and Node #1 (10 in FIG. 1) may transfer the packet to Node #2 (10 in FIG. 1) of a next hop. Or Node #1 (10 in FIG. 1) may receive the process rule sequence from the controller (20 in FIG. 1), add it to the packet, and transfer the packet to Node #2 (10 in FIG. 1) of the next hop. Further, a configuration in which a dedicated device receiving necessary process rules from the controller (20 in FIG. 1) and generating a process rule sequence is provided may be employed. Further, a configuration in which a node located on a boundary with an external server or terminal comprises functions of receiving a plurality of process rules from the controller (20 in FIG. 1) and generating the process rule sequence may be employed.

The setting of a process rule is completed by having a node (Node #2 in FIG. 1 or Nodes #1 and #2 in FIG. 1) that has received a packet with such a process rule sequence extract a process rule that should be set in the own process rule storage unit from the process rule sequence and set it in its own process rule storage unit. As a result, it becomes possible to transfer a subsequent user packet reliably and quickly without following the procedure shown in FIG. 26. Further, the terminal node (Node #2 in FIG. 1) may delete the process rule added to the first packet.

<First Exemplary Embodiment>

Next, a first exemplary embodiment of the present invention will be described in detail with reference to the drawings. FIG. 1 is a drawing illustrating a configuration of a communication system according to the first exemplary embodiment of the present invention. FIG. 1 shows two nodes 10, a controller 20, and Hosts (A) and (B) that communicate via the nodes 10. Although the example in FIG. 1 shows two nodes 10, the controller 20, and two hosts (Host (A) and Host (B)), the number of each element is merely an example and any number of each element can be provided.

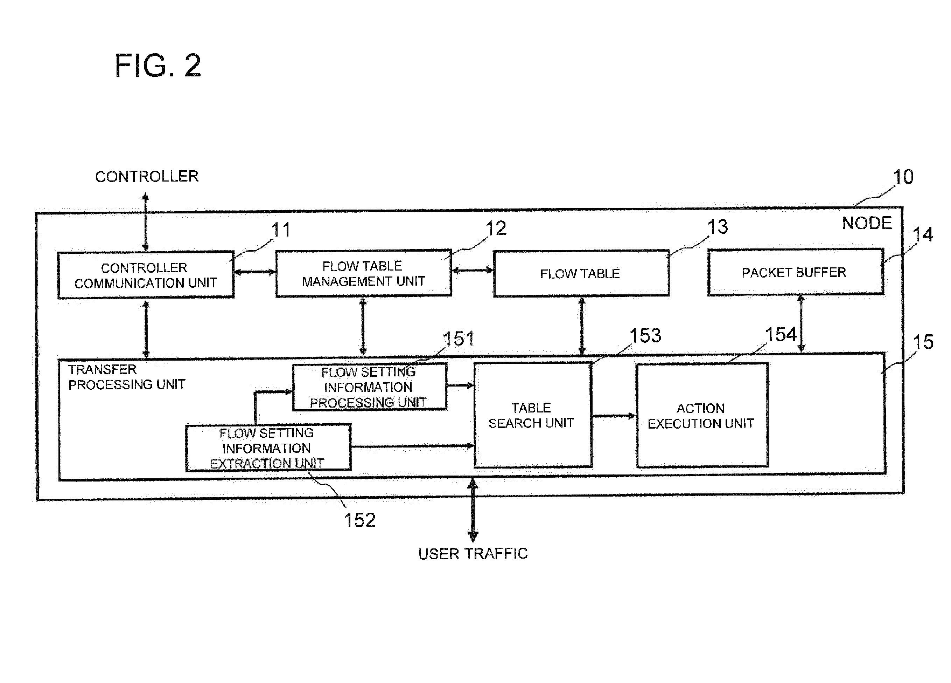

FIG. 2 is a drawing showing a detailed configuration of the node 10. With reference to FIG. 2, the node 10 comprises a controller communication unit 11 that communicates with the controller 20, a flow table management unit 12 that manages a flow table 13, a packet buffer 14, and a transfer processing unit 15. Note that the node 10 does not always have to comprise the packet buffer 14.

Further, the transfer processing unit 15 comprises a flow setting information processing unit 151 that sets a process rule (flow entry) in the flow table 13 via the flow table management unit 12 according to process rule setting information extracted by a flow setting information extraction unit 152, the flow setting information extraction unit 152 that extracts the process rule setting information from a process rule sequence header added to a packet received as user traffic and that outputs the information to the flow setting information processing unit 151, a table search unit 153 that searches the flow table 13 when the process rule sequence header is not added to a received packet and that outputs a process content (action) defined in a corresponding process rule (flow entry) to an action execution unit 154, and the action execution unit 154 that executes the process content (action) outputted from the table search unit 153. Further, when there is no process rule (flow entry) fitting a received packet as a result of a search in the flow table 13, the table search unit 153 buffers this received packet in the packet buffer 14 and requests the controller 20 to generate a process rule sequence.

The node 10 described above can be realized with a configuration in which the flow setting information processing unit 151 and the flow setting information extraction unit 152 are added to an OpenFlow switch.

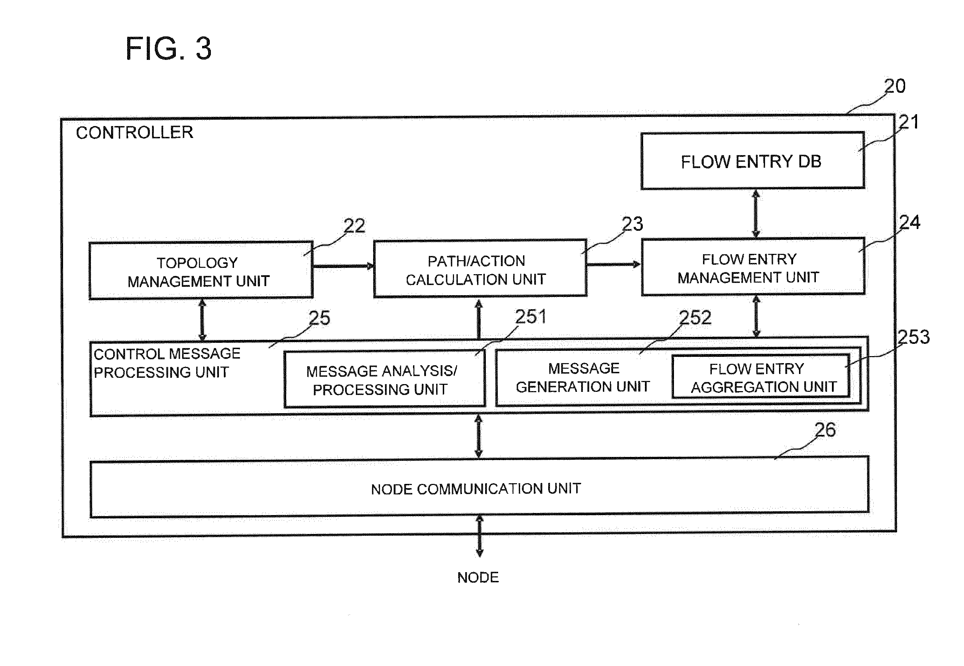

FIG. 3 is a drawing showing a detailed configuration of the controller 20. With reference to FIG. 3, the controller 20 comprises a flow entry data base (flow entry DB) 21 that stores process rules (flow entries), a topology management unit 22 that builds network topology information based on connections between the nodes 10 collected via a node communication unit 26, a path/action calculation unit 23 that derives the transfer path of a packet and an action executed by a node 10 on the transfer path based on the network topology information built by the topology management unit 22, a flow entry management unit 24 that registers the result of calculation by the path/action calculation unit 23 to the flow entry DB 21 as a process rule (flow entry) and that responds to a process rule (flow entry) add or update request from the nodes 10, a control message processing unit 25, and the node communication unit 26 that communicates with the nodes 10. Note that the flow entry database (flow entry DB) 21 can be omitted when there is no need to hold a process rule (flow entry) instructing the nodes 10 to add or update. Further, a configuration in which the flow entry database (flow entry DB) 21 is provided separately in an external server may be employed.

Further, the control message processing unit 25 comprises a message analysis/processing unit 251 that analyzes a control message received from a node and performs necessary processing and a message generation unit 252 that comprises a flow entry aggregation unit 253 generating a process rule sequence in which process rules (flow entries) outputted from the flow entry management unit 24 are aggregated.

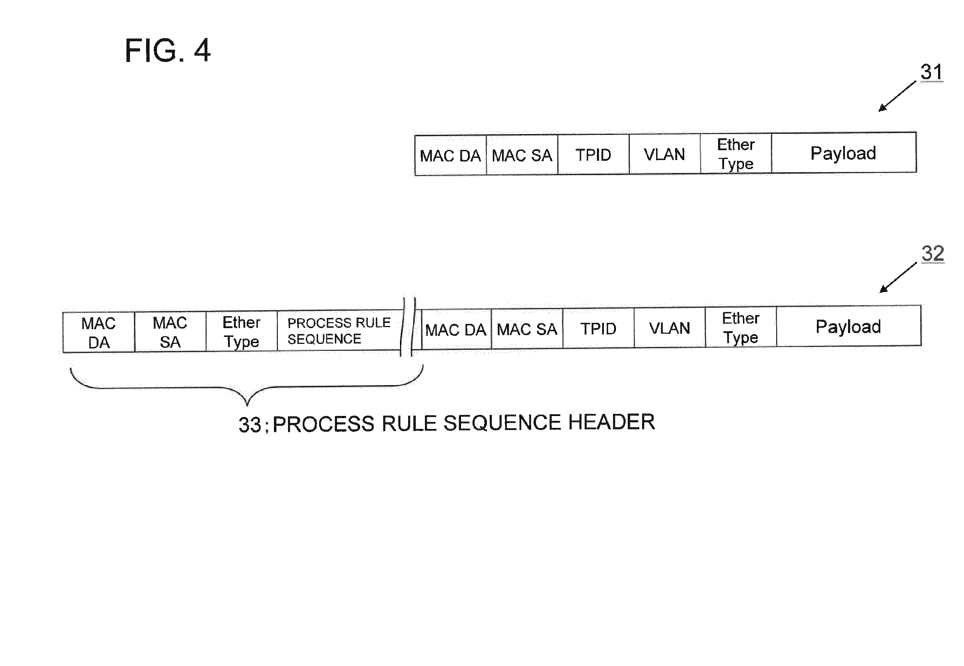

FIG. 4 is a drawing for explaining the configuration of a packet with a process rule sequence generated by a node 10 based on an instruction from the control device (controller) 20. In the example in FIG. 4, the packet 32 with a process rule sequence has a process rule sequence header 33 including a process rule sequence added to the top of a user packet 31.

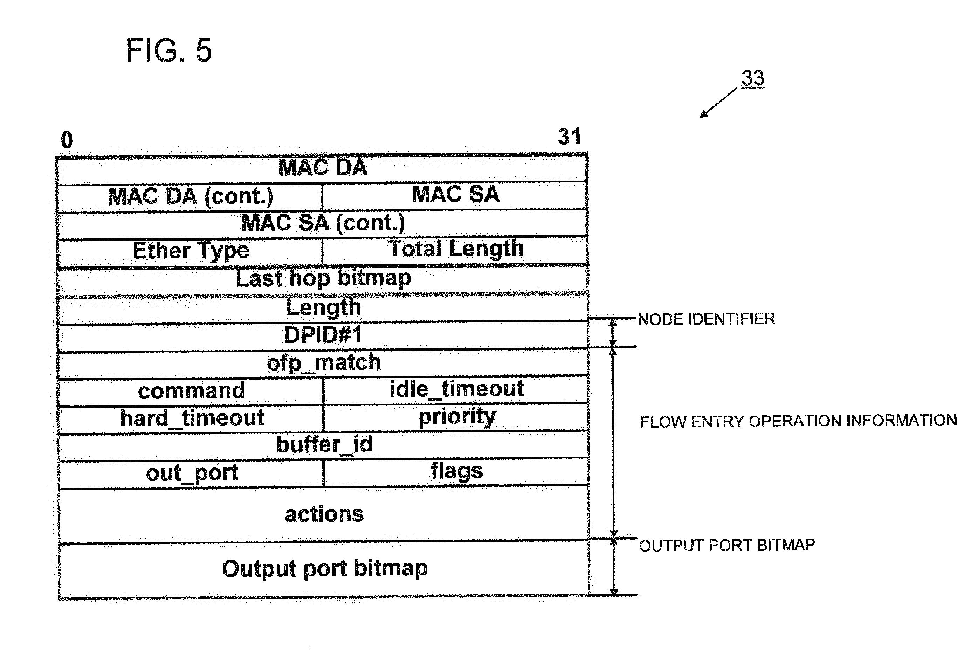

FIG. 5 is a drawing showing a configuration example of the process rule sequence header. In the example shown in FIG. 5, the process rule sequence header 33 has a configuration in which the process rule setting information having fields from Last hop bitmap and Length to actions indicating a node of the last hop that should delete a process rule sequence from the packet with the process rule sequence as a unit and Output port bitmap indicating a port (a node that should transfer the packet with the process rule sequence) that should output the packet with the process rule sequence are added to MAC destination address (MAC DA), MAC source address (MAC SA), upper layer protocol type (Ether Type), and total header length (Total Length) for the number of nodes being set.

DPID#1 represents an identifier of the node 10. From the of p_match field to the actions field, flow entry operation information executed by the node indicated by DPID#1 is stored. Out of the flow entry operation information, fields relates to the present invention are the of p_match field storing information corresponding to the matching keys (Flow Keys) of a flow entry shown in FIG. 24, idle_timeout and hard_timeout storing the duration (validity period) of the process rule (flow entry), and actions storing the process content corresponding to Actions of a flow entry shown in FIG. 24.

Last hop bitmap indicates which node is the last hop. For instance, when Last hop bitmap indicates "10000000000...." (the position of "1" indicates a node of the last hop), the node of DPID#1 in FIG. 5 is the last hop. Similarly, when Last hop bitmap indicates "00001000000...." (the position of "1" indicates a node of the last hop), a node that sets the process rule (flow entry) using the fifth piece of the flow entry operation information is the last hop.

Similarly, Output port bitmap indicates from which port each node should output the packet with the process rule sequence using a bitmap.

Further, bitmap is used to indicate the last hop and the output port in the present exemplary embodiment, however, other formulations such as one in which a node identifier field indicating the aforementioned node identifier is provided may be employed as long as a particular node 10 can be specified as the last hop and the output port.

The control device (controller) 20 described above can be realized by adding the flow entry aggregation unit 253 geenrating the process rule sequence described above and the function of transmitting a process rule sequence to the nodes 10 to the OpenFlow controllers in Non-Patent Documents 1 and 2.

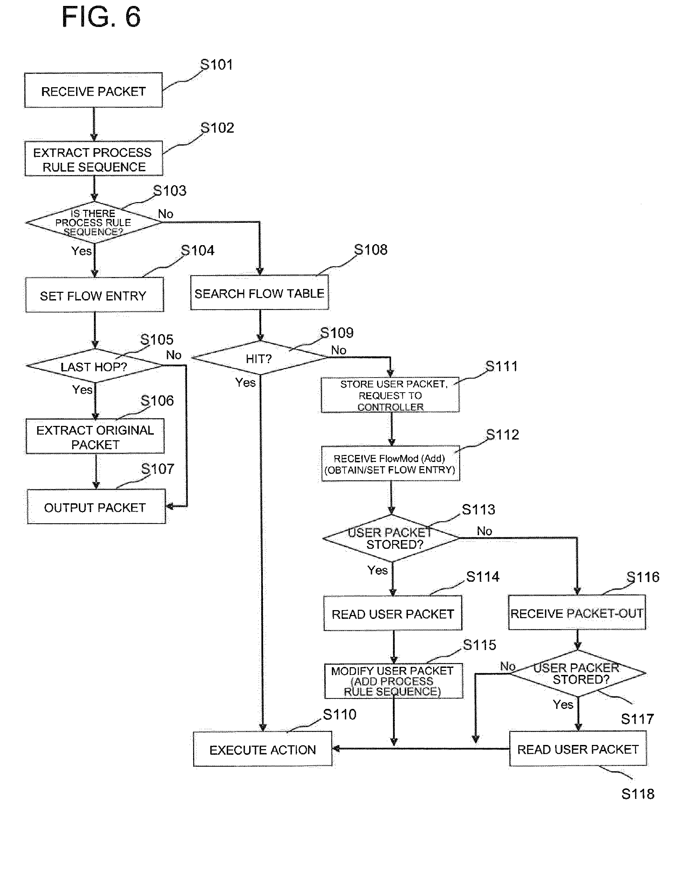

Next, operations of the nodes 10 and the controller 20 will be described. FIG. 6 is a flowchart showing the operation of a node 10. With reference to FIG. 6, upon receiving a packet from a host or another node 10 (step S101), the node 10 attempts to extract a process rule sequence from the received packet (step S102).

When being able to extract a process rule sequence in step S102 (Yes in step S103), the node 10 takes out a process rule (flow entry) that should be set from the process rule sequence and sets the rule in the flow table 13 (step S104). Next, the node 10 refers to Last hop bitmap described above and confirms whether or not the node 10 itself is the last hop. Here, when determining itself to be the last hop, the node 10 deletes the process rule sequence from the received packet, extracts an original packet (user packet) (step S106), and outputs the packet from a port specified in Output port bitmap (step S107). Further, when determining itself not to be the last hop in step S105, the node 10 outputs the packet (packet with the process rule sequence) with the process rule sequence from the port specified by Output port bitmap (step S107).

Meanwhile, when not being able to extract the process rule sequence in step S102 (No in step S103), the node 10 refers to the flow table 13 and searches for a process rule (flow entry) fitting the received packet (step S108).

When a process rule (flow entry) fitting the received packet is found as a result of the search in the flow table 13 (Yes in step S109), the node 10 executes a process content (action) defined in the process rule (flow entry) (step S110).

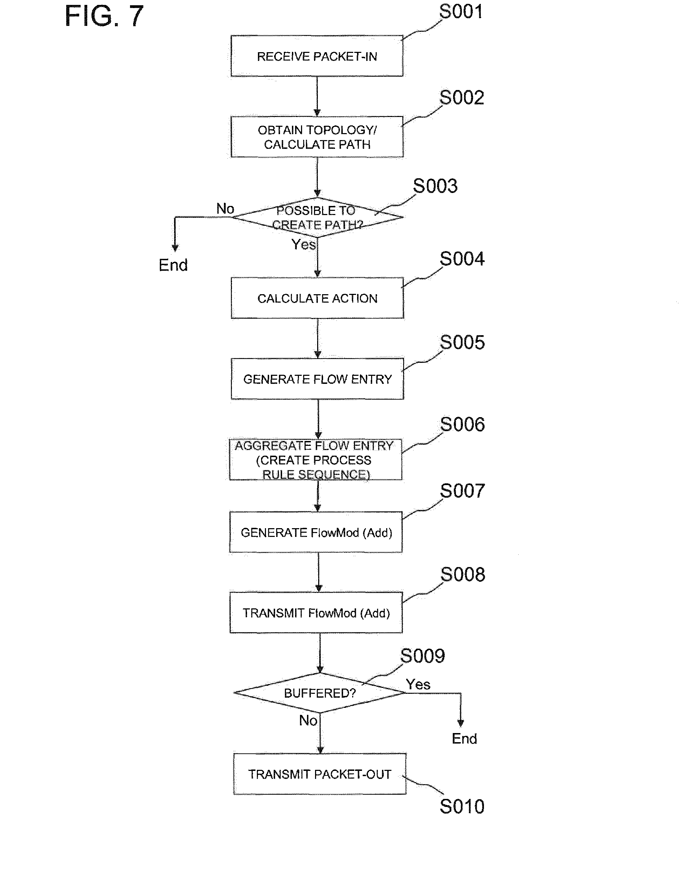

Meanwhile, when no process rule (flow entry) fitting the received packet is found as a result of the search in the flow table 13 (No in step S109), the node 10 determines that an unknown packet has been received, stores the packet (user packet) in the packet buffer 14, transmits the received packet to the controller 20, and requests the controller 20 to generate a process rule sequence (step S111). The controller 20 performs response processing thereafter including generating a process rule sequence according to a procedure shown in FIG. 7 (described later).

Upon receiving a process rule (flow entry) setting instruction (Flow Mod (Add)) with a process rule sequence attached from the controller 20, the node 10 sets a process rule (flow entry) in its own flow table 13 according to Flow Mod (Add) (step S 112).

Next, the node 10 confirms whether or not any user packet is stored in the packet buffer 14 (step S113), and if so (Yes in step S113), the node 10 reads the user packet (step S114), adds the process rule sequence received in step S112 to the user packet as a process rule sequence header (step S115), and executes a process content (action; output from the designated port of the packet to which the process rule sequence header is added) defined in the process rule (flow entry) set as above (step S110). As a result, the packet with the process rule sequence header is transferred to a node of the next hop.

Meanwhile, when the node 10 does not hold any user packet such as when the node 10 does not comprise the packet buffer 14 (No in step S113), a packet output instruction (Packet-Out) is received from the controller 20 (step S116).

Having received the packet output instruction (Packet-Out), the node 10 confirms whether or not any user packet is stored in the packet buffer 14 (step S 117), and if so (Yes in step S117), the node 10 reads the user packet (step S118), and executes a process content (action; the addition of the process rule sequence header and output from the designated port of the packet to which the process rule sequence header is added, or search in the flow table) received with the packet output instruction (Packet-Out) (step S110). Further, when no user packet is stored (No in step S117), the node 10 executes a process content (action; the addition of the process rule sequence header to the user packet and output from the designated port of the packet to which the process rule sequence header is added, or search in the flow table) received with the packet output instruction (Packet-Out) on the user packet received with the packet output instruction (Packet-Out) (step S110). As a result, the packet with the process rule sequence header is transferred to a node of the next hop.

Next, an operation of the controller 20 that has received the request (to generate a process rule sequence) from the node 10 in step S111 in FIG. 6 will be described.

FIG. 7 is a flowchart showing the operation of the controller 20. With reference to FIG. 7, upon receiving a request (to generate a process rule sequence) from the node 10 in step S111 in FIG. 6 (step S001), the controller 20 obtains the network topology information built by the topology management unit 22 and calculates a transfer path of the packet (step S002).

Except for when the controller 20 determines that the packet cannot be transferred as a result of calculating the transfer path of the packet because no path can be generated or a node on the path is damaged (No in step S103), the controller 20 calculates an action corresponding to the transfer path calculated (step S004) and generates a process rule (flow entry) applied to each node 10 on the path (step S005).

Next, after the generation of the process rules (flow entries) is completed, the flow entry aggregation unit 253 of the controller 20 aggregates the process rules (flow entries) that should be set in nodes on the downstream side from the node 10 requesting the process rules (flow entries) into a process rule sequence (step S006).

Next, the controller 20 generates a process rule (flow entry) transmitted to the node 10 requesting the process rule (flow entry) (step S007), and transmits the process rule (flow entry) to the node 10 requesting the process rule (flow entry) with the process rule sequence generated in step S006 attached (step S008).

Then, when no packet is buffered in the node 10 (No in step S009), the controller 20 performs the packet output instruction (Packet-Out) (step S010). This packet output instruction is performed by indicating a packet to be outputted (the packet received in Packet-In of step S001) and an action to be executed on this packet (the generation of a packet to which a process rule sequence header is added and output from a designated port) or by indicating a packet to be outputted (the packet received in Packet-In of step S001) and an action to be executed on this packet (search in the flow table). Further, when a packet is buffered in the node 10 (Yes in step S009), the processing by the controller 20 is omitted since the node 10 performs the output processing on the packet, as described as steps S113 and S114 using FIG. 6.

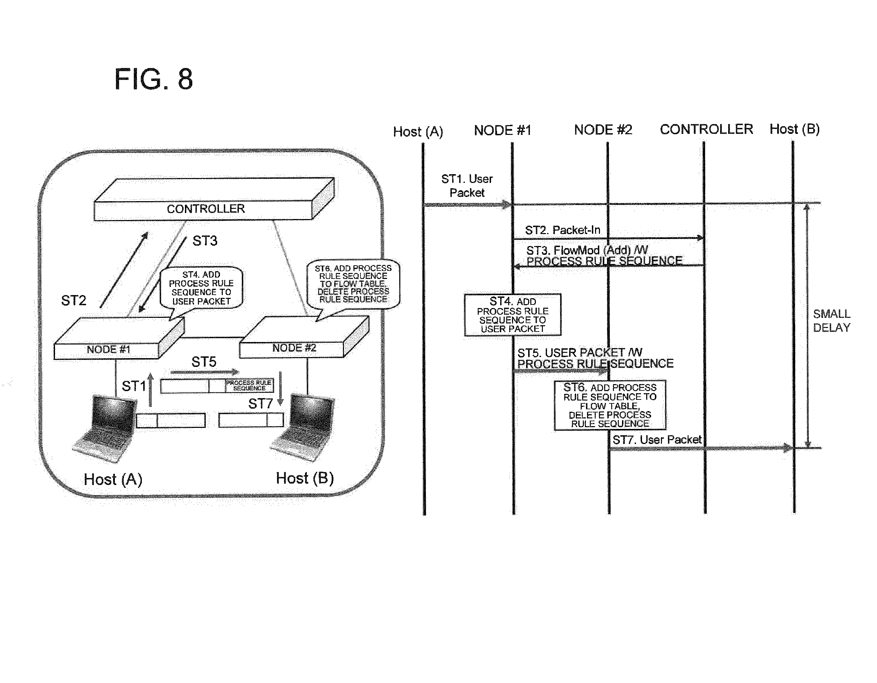

FIG. 8 shows a reference diagram and a sequence diagram for explaining a sequence of events from issuance of a request (to generate a process rule sequence) to the controller 20 by Node #1 that has received a user packet from Host (A) to delivery of the user packet to Host (B).

As shown in FIG. 8, when Host (A) transmits a user packet addressed to Host (B) to Node #1 (ST1; User Packet in FIG. 8), Node #1 determines the received packet to be an unknown packet since it does not have any process rule sequence attached or there is no process rule (flow entry) fitting the receive packet in the flow table 13 (No in step S103 and No in step S109 in FIG. 6) and issues a request (to generate a process rule sequence) to the controller 20 (ST2; Packet-In in FIG. 8).

The controller 20 that has received the request (to generate a process rule sequence) generates a process rule sequence according to the flowchart in FIG. 7 and transmits the process rule sequence to Node #1 with a process rule (flow entry) for Node #1 (ST3; Flow Mod (Add)/w process rule sequence in FIG. 8).

Node #1 sets the process rule (flow entry) transmitted by the controller 20 in its own flow table 13, adds the process rule sequence transmitted by the controller 20 to the received user packet (ST4 in FIG. 8), and transmits the user packet to Node #2 (ST5; User Packet/w process rule sequence in FIG. 8).

Node #2 that has received the user packet with the process rule sequence added thereto extracts the process rule sequence from the received packet, takes out a process rule (flow entry) therefrom that should be set by Node #2, and sets (adds) the process rule in the flow table 13 thereof (ST6 in FIG. 8). Finally, Node #2 removes the process rule sequence from the user packet with the process rule sequence added thereto and transmits the user packet to the destination, Host (B) (ST7; User Packet in FIG. 8).

As described, according to the present exemplary embodiment, the time it takes to set a flow entry in the node 10 on the transfer path after the first user packet has been received can be reduced since the number of times that the controller 20 transmits a process rule (flow entry) to the node 10 does not increase according to the number of nodes on the transfer path (one time in the example in FIG. 8). Further, the aforementioned situation in which some nodes experience a delay in setting a process rule (flow entry) does not occur since the key to a sequence of actions, the Flow Mod (Add) command to which a process rule sequence is added, is transmitted using TCP (Transmission Control Protocol) and the setting of the process rule (flow entry) thereafter is sequentially executed by a node on the path before the transfer of a user packet.

Here, the time required for setting process rules (flow entries) in all nodes is compared between the case shown in FIG. 26 where a process rule (flow entry) is set in each individual node and the case in FIG. 8 where a process rule sequence is transmitted to a first node. In the explanation below, each time required/delay is represented by the following variable.

$T_f$: Flow setting processing time by FlowMod (Add)
$T_b$: Barrier Request processing time
$T_{sc}$: node-controller delay
$T_{cs}$: controller-node delay
$T_c$: path calculation time for the controller
$T_1$: delay between nodes/node-host link delay
N: the number of nodes in which flow entries are set

The time $T_{setup0}$ required for setting process rules (flow entries) in all nodes in the method in FIG. 26 is calculated by the following expression. As evident in the following expression, the time $T_{setup0}$ increases according to the number of nodes N.

$$T_{setup0} = T_{sc} + T_c + N\,(T_{cs} + T_f + T_b + T_{sc} + T_1)$$

Meanwhile, the time $T_{setup}$ required for setting process rules (flow entries) in all nodes in the present invention is calculated by the following expression.

$$T_{setup} = T_{sc} + T_c + T_{cs} + N\,(T_f + T_1)$$

As one can see by comparing both expressions, the present invention has advantages in that the delay $T_{cs}$ occurring when a process rule is set happens only once and that the time $T_b$ required for Barrier Request/Reply and the response delay $T_{sc}$ are eliminated.

<Second Exemplary Embodiment>

Next, a second exemplary embodiment of the present invention will be described in detail with reference to the drawings. In the first exemplary embodiment of the present invention, a flow entry is set in the node of the first hop by having the controller 20 that has received the request (to generate a process rule sequence) transmit the Flow Mod (Add) message, however, the present exemplary embodiment employs another method that does not use the Flow Mod (Add) message. Further, the node 10 and the controller 20 in the second exemplary embodiment are configured identically to those in the first exemplary embodiment; therefore, explanations will be omitted.

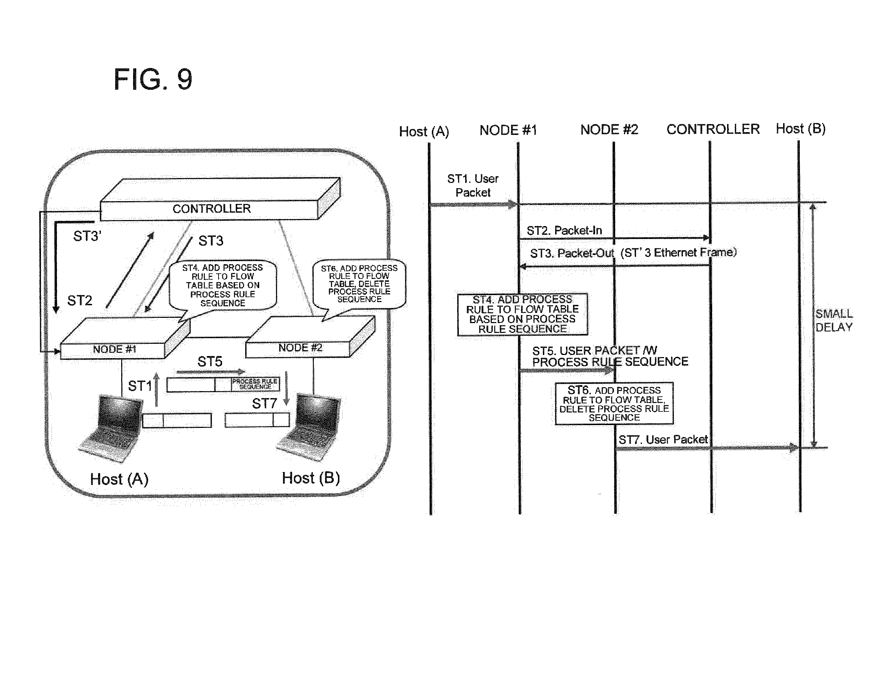

FIG. 9 shows a reference diagram and a sequence diagram for explaining a sequence of events in a communication system of the second exemplary embodiment of the present invention. The second exemplary embodiment is different from the first exemplary embodiment in FIG. 8 in that the controller 20 transmits a process rule sequence using Packet-Out (ST3) or Ethernet (registered trademark) Frame (ST'3) in ST3 (or ST'3) in FIG. 9 and that Node #1 specifies a process rule (flow entry) that should be set therein from the process rule sequence and sets the specified process rule in ST4 in FIG. 9. The second exemplary embodiment will be described below with these differences as focal points.

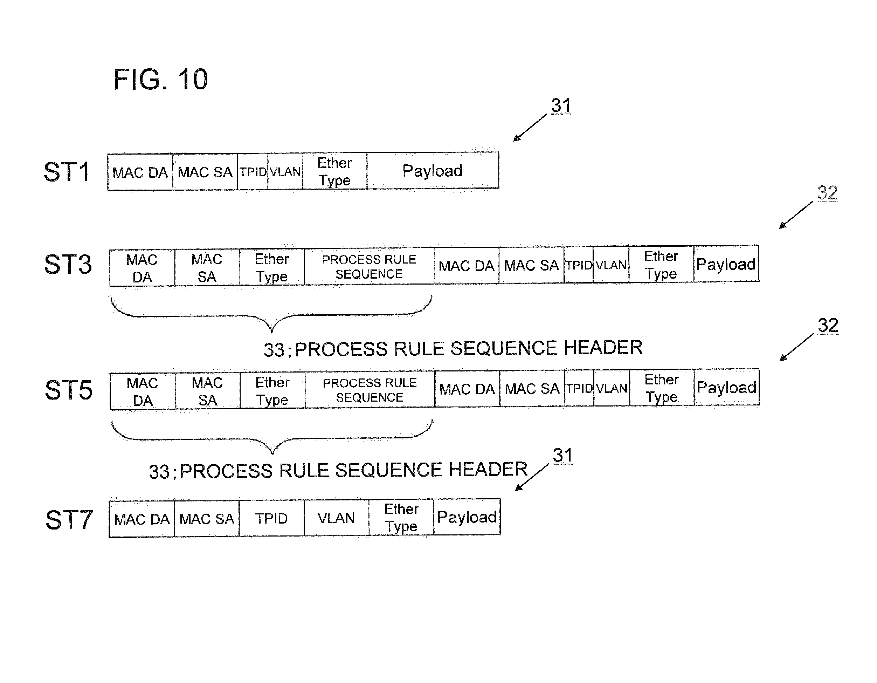

FIG. 10 is a drawing showing a configuration of a packet with a process rule sequence that the controller and the node of the second exemplary embodiment of the present invention send to a next hop. ST1 in FIG. 10 denotes a user packet 31 transmitted from Host (A) to Node #1 in ST1 in FIG. 9.

ST3 in FIG. 10 denotes a packet 32 with a process rule sequence header that the controller 20 that has received a request (to generate a process rule sequence) from Node #1 transmits to Node #1 in ST3 or ST'3 in FIG. 9.

ST5 in FIG. 10 denotes a packet 32 with a process rule sequence header that Node #1 that has received the packet 32 with a process rule sequence header from the controller 20 transmits to Node #2 in step ST5 in FIG. 9 after setting a process rule (flow entry) that should be set therein.

ST7 in FIG. 10 denotes a user packet that Node #2 that has received the packet 32 with a process rule sequence header from Node #1 transmits to Host (B) in step ST7 in FIG. 9 after setting a process rule (flow entry) that should be set therein and removing the process rule sequence therefrom.

Here, the process rule sequence header and a system in which Node #1 or #2 is determined to be the last hop will be described again.

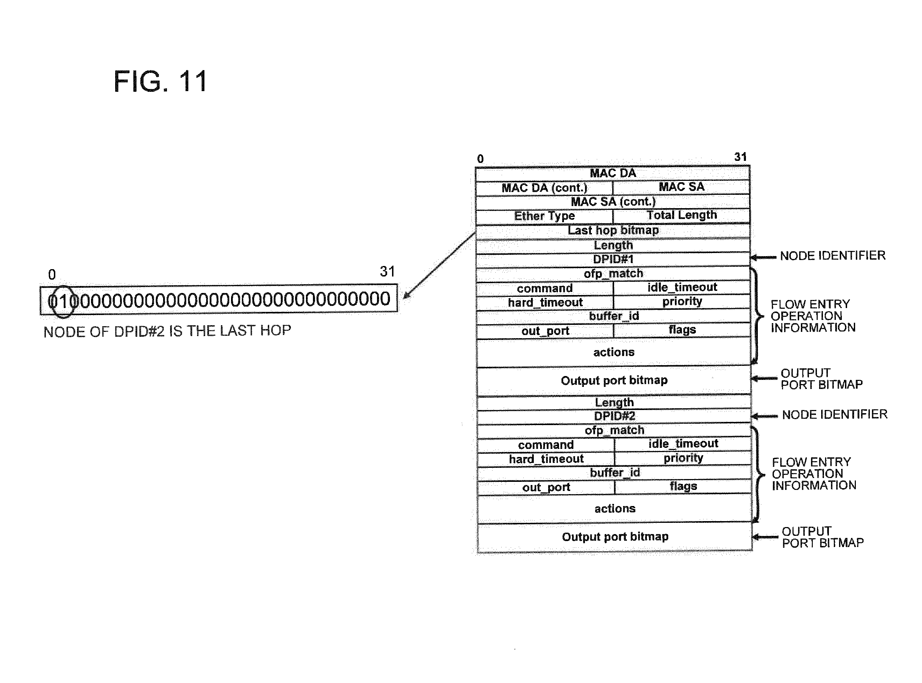

FIG. 11 is a drawing showing a configuration example of the process rule sequence header, and it is basically the same as the configuration shown in FIG. 5. In the example shown in FIG. 11, process rules (process rule setting information) of Nodes #1 and #2 are listed below Last Hop Bitmap, the DPID#1 and DPID#2 fields store node identifiers, and each node is able to specify a process rule that should be set in its own node. Further, since Node #2 is the last hop in the example in FIG. 11, Last hop bitmap says, "010000000...."

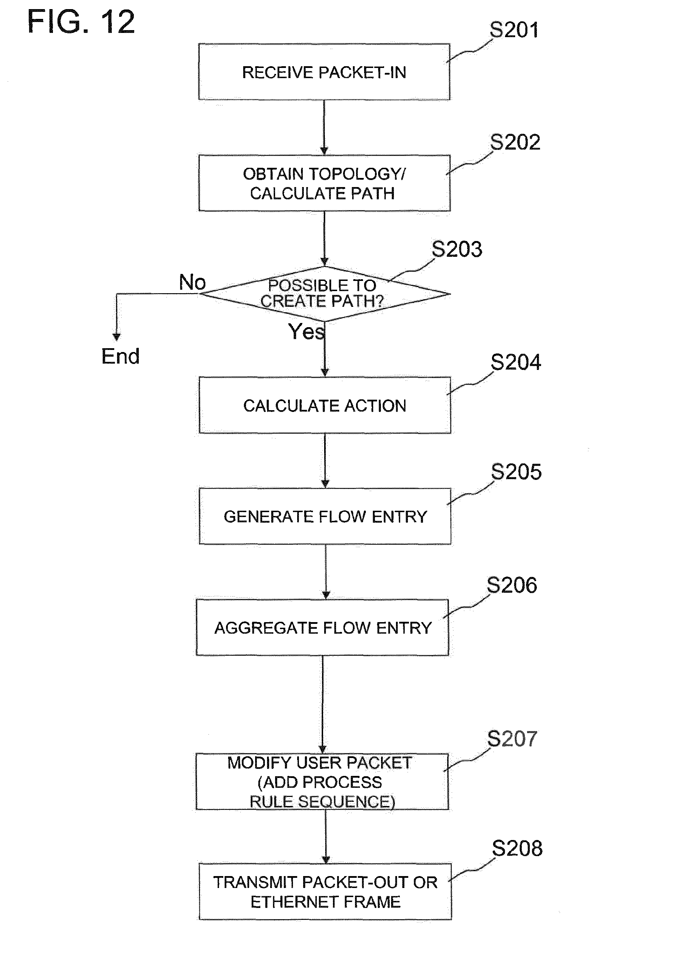

Next, an operation of the present exemplary embodiment will be described with the differences from the first exemplary embodiment as focal points. FIG. 12 is a flowchart showing an operation of the controller 20 of the second exemplary embodiment.

FIG. 12 is a flowchart showing the operation of the controller 20. Since steps S201 to S206 in FIG. 12 are the same as steps S001 to S006 in FIG. 7 showing the operation of the controller 20 of the first exemplary embodiment, explanations will be omitted.

Having generated and aggregated flow entries after receiving a request (to generate a process rule sequence) from the node 10 in step S111 in FIG. 6, the controller 20 attaches the process rule sequence generated in step S206 to a user packet as a process rule sequence header and generates a packet with a process rule sequence (step S207; user packet modification).

Then the controller 20 executes the packet output instruction (Packet-Out) (step S208). This packet output instruction is performed by indicating a packet to be outputted (the packet with a process rule generated in step S207) and an action to be executed on this packet (output from a designated port).

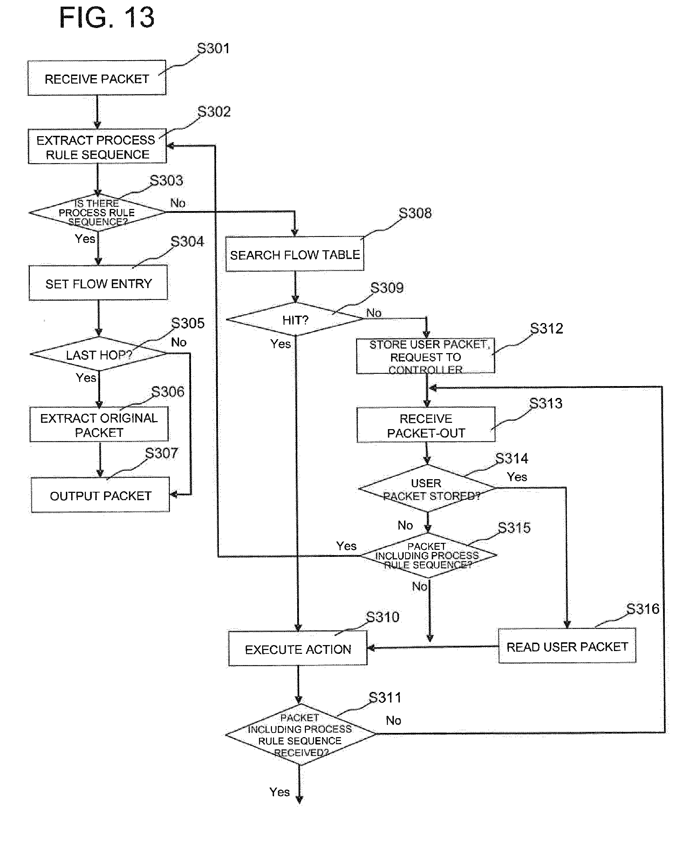

FIG. 13 is a flowchart showing an operation of the node 10 of the second exemplary embodiment. Since the operations in steps S301 to S310 in FIG. 13 correspond and equal to those in steps S101 to S110 in FIG. 6 in the first exemplary embodiment, explanations will be omitted.

The node 10, which has requested the controller 20 to generate a process rule sequence in step S312, receives an instruction to output the packet with the process rule sequence added thereto as described using FIG. 12 (step S313).

Next, the node 10 confirms whether or not the user packet has been stored (step S314), and if the user packet has been stored (Yes in step S314), the node 10 reads the user packet from the packet buffer 14 (step S316), and executes a process content (action; output from a designated port) received with the packet output instruction (Packet-Out) (step S310).

Meanwhile, when the user packet has not been stored (No in step S314), the node 10 confirms whether or not a process rule sequence is included in the packet received with the packet output instruction (Packet-Out) (step S315), and if a process rule sequence is included (Yes in step S315), the node 10 executes processes from step S302 on. Further, when no process rule sequence is included in the packet received with the packet output instruction (Packet-Out) (No in step S315), the node 10 executes a process content (action; output from a designated port) received with the packet output instruction (Packet-Out) on the user packet received with the packet output instruction (Packet-Out) (step S310).

After executing the action in step S310, the node 10 determines whether or not a packet including a process rule sequence has been received (step S311), and if a packet including a process rule sequence has been received, the node 10 terminates processing. If a packet including a process rule sequence has not been received, the node 10 returns to step S313 and waits for a packet including a process rule sequence (Packet-Out).

As described, the present invention can be realized in a form in which the packet output instruction (Packet-Out) is received from the controller 20. Further, the present invention can be realized by having the controller 20 transmit a packet with a process rule sequence added thereto, equivalent to the packet output instruction (Packet-Out), to the node 10 via a data plane using Ethernet (registered trademark) Frame, instead of the packet output instruction (Packet-Out).

<Third Exemplary Embodiment>

The first and the second exemplary embodiments of the present invention have been described above, however, when the number of nodes on a path generated by the controller 20 increases, the length of each process rule sequence may increase to exceed the maximum frame length. A third exemplary embodiment in which modifications are made so that process rules can be set in more nodes will be described below.

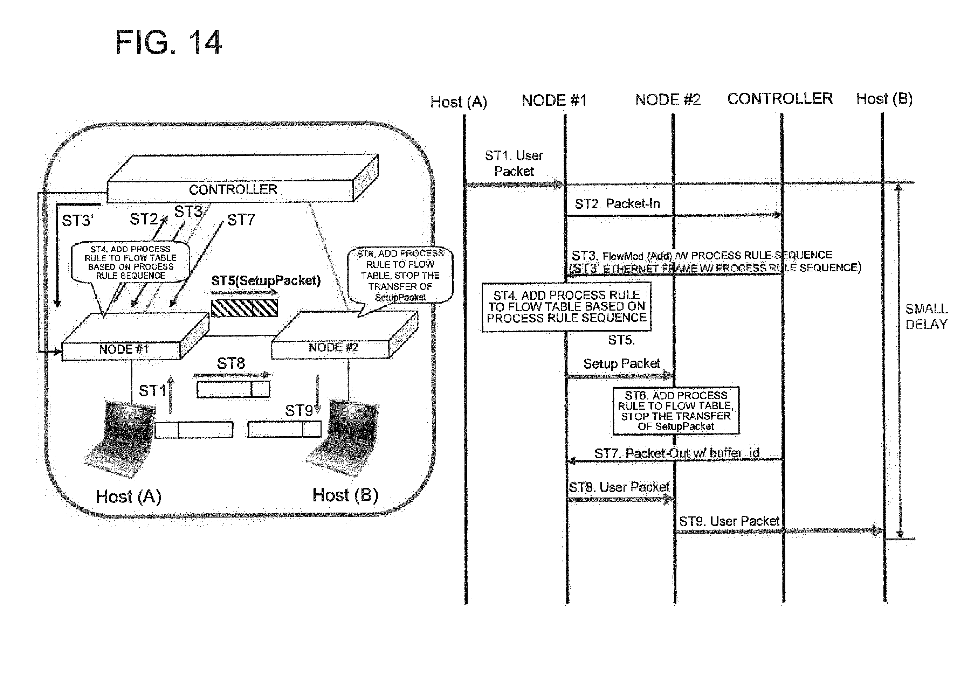

FIG. 14 shows a reference diagram and a sequence diagram for explaining a sequence of events in a communication system of the third exemplary embodiment of the present invention. The third exemplary embodiment is different from the second exemplary embodiment in FIG. 9 in that the controller 20 transmits a setup packet (Setup Packet) containing only a process rule sequence in ST3 (or ST3') in FIG. 14 and then an original packet is transmitted based on the packet output instruction (Packet-Out) from the controller 20, and that the transfer stops at a node of the last hop of the setup packet (Setup Packet). Here, the setup packet (Setup Packet) is a packet dedicated to setting a process rule (flow entry) without a user packet part rather than adding a process rule sequence header to a user packet. The third exemplary embodiment will be described below with these differences as focal points.

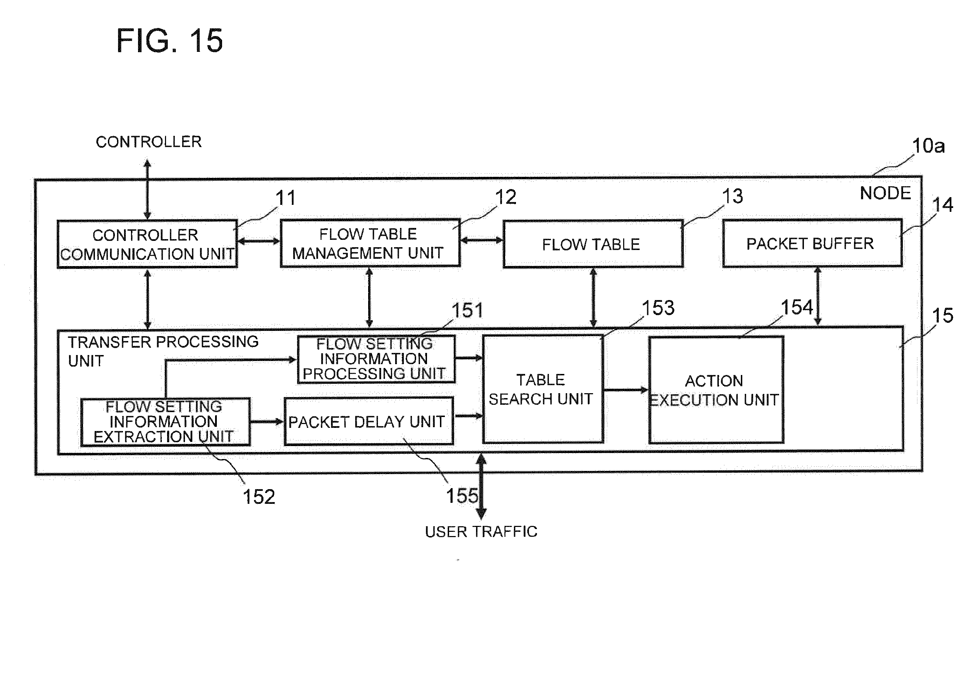

FIG. 15 is a diagram showing a detailed configuration of a node 10a of the present exemplary embodiment. With reference to FIG. 15, the node 10a of the present exemplary embodiment has a packet delay unit 155 in the transfer processing unit 15, in addition to the configuration of the node 10 of the first exemplary embodiment.

The packet delay unit 155 is provided so as to delay the reception of a packet so that a user packet does not search the flow table 13 when the user packet is received before the flow setting information processing unit 151 completes the setting of a process rule (flow entry) in the flow table 13 via the flow table management unit 12 in the case where the user packet is transmitted after the setup packet (Setup Packet) as described above.

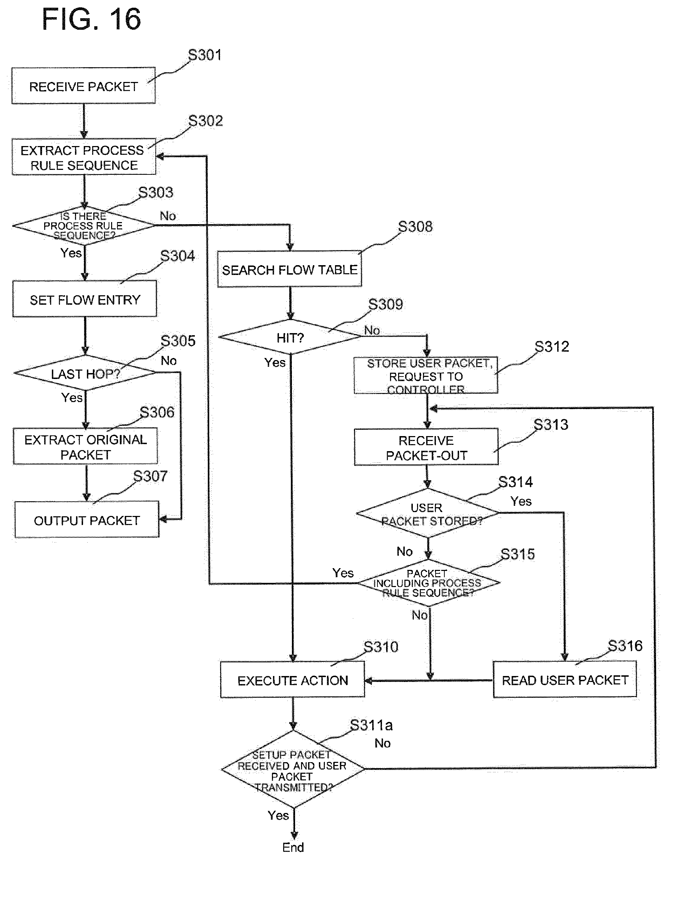

FIG. 16 is a flowchart showing an operation of the node 10a of the third exemplary embodiment. The node 10a is different from the node 10 of the second exemplary embodiment described using FIG. 13 in that the node 10a confirms whether or not the setup packet (Setup Packet) has been received and a user packet has been transmitted (step S311a) after the action in step S310 has been executed, and if the conditions are met, the node 10a terminates processing (Yes in step S311a). If the conditions are not met, the node 10a wait for the packet output instruction (Packet-Out) from the controller 20 in step S313.

According to the third exemplary embodiment of the present invention described above, even more process rules (flow entries) can be accommodated in a process rule sequence.

Further, as necessary, a configuration in which the process rule sequence does not contain process rules (flow entries) for some of the nodes 10 on the path and these nodes issue a request (to generate a process rule sequence) to the controller 20 may be employed. For instance, a configuration in which nodes on the upstream side on a path set process rules (flow entries) using the setup packet (Setup Packet) of the third exemplary embodiment and each node on the downstream side individually requests the generation and transmission of a process rule (flow entry), or a configuration in which a process rule (flow entry) is set using a process rule sequence added to a user packet of the first and the second exemplary embodiments may be employed.

<Fourth Exemplary Embodiment>

Next, a fourth exemplary embodiment of the present invention having a function of verifying the validity of a process rule sequence included in a received packet will be described. Since the basic configuration of the present exemplary embodiment is the same as the third exemplary embodiment, the fourth exemplary embodiment will be described below with differences as focal points.

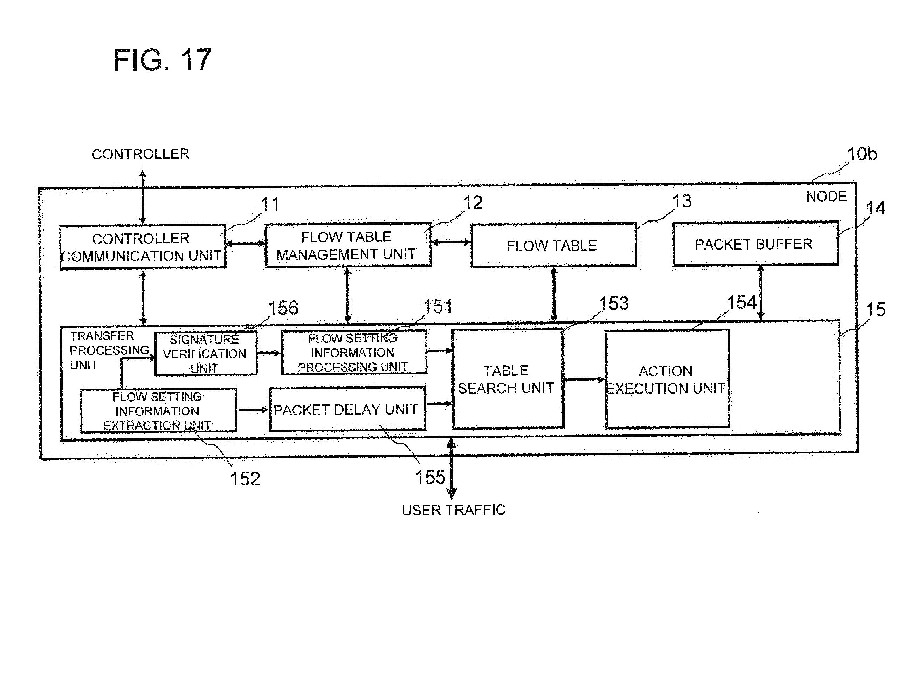

FIG. 17 is a block diagram illustrating a configuration of a node 10b of the fourth exemplary embodiment of the present invention. The node 10b is different from the node 10a of the third exemplary embodiment shown in FIG. 15 in that a signature verification unit 156 that verifies a signature added to a process rule sequence using a predetermined public key of a controller 20a and discards a packet whose validity cannot be confirmed is added between the flow setting information extraction unit 152 and the flow setting information processing unit 151 in the transfer processing unit 15.

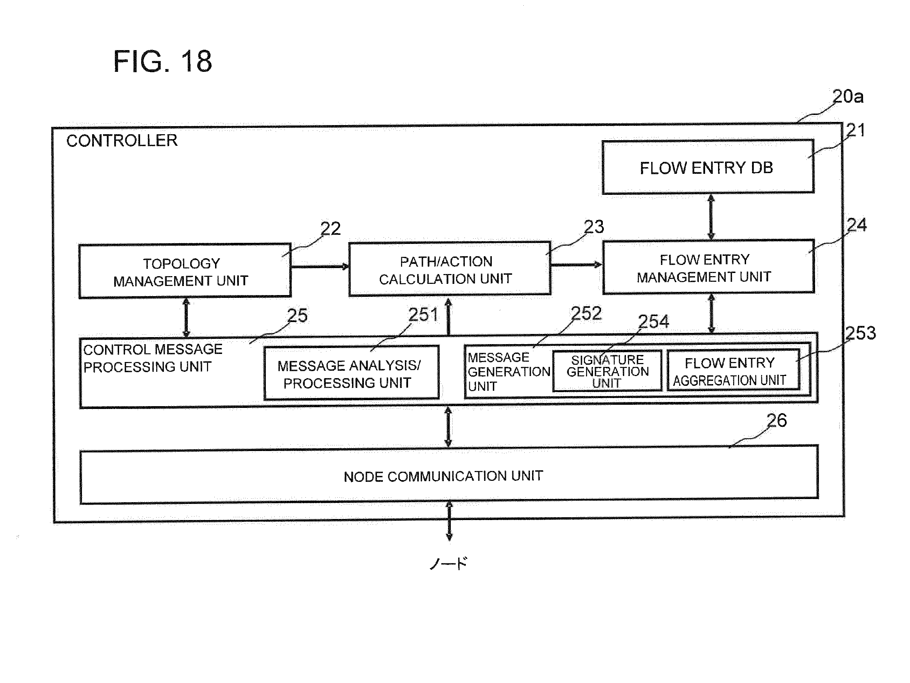

FIG. 18 is a block diagram illustrating a configuration of a controller 20a of the fourth exemplary embodiment of the present invention. The controller 20a is different from the controller 20 of the first and the second exemplary embodiments shown in FIG. 3 in that a signature generation unit 254 that generates a signature of a process rule sequence using a private key of the controller 20a is added in the message generation unit 252.

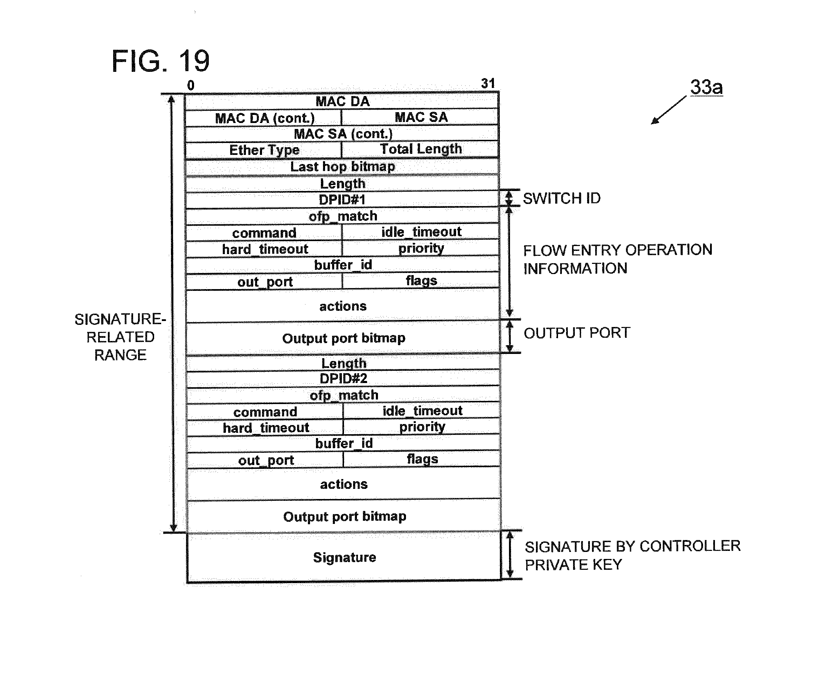

FIG. 19 is a drawing showing a configuration example of a process rule sequence header 33a of the present exemplary embodiment. The process rule sequence header 33a is different from the process rule sequence header 33 of the first and the third exemplary embodiments in that a signature generated using information in fields indicated by "signature-related range" in FIG. 19 is added to the end of the header.

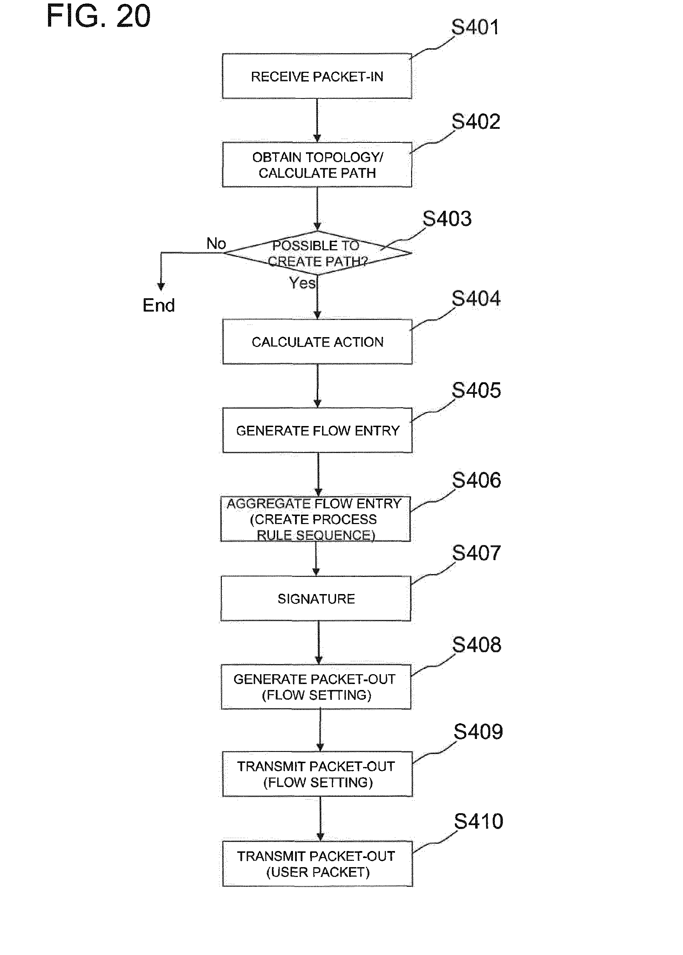

FIG. 20 is a flowchart showing an operation of the controller 20a. The operation of the controller 20a differs from the operation of the controller 20 of the third exemplary embodiment (refer to the sequence diagram in FIG. 14) in that processing for generating a signature (step S407) is added after the flow entry aggregation.

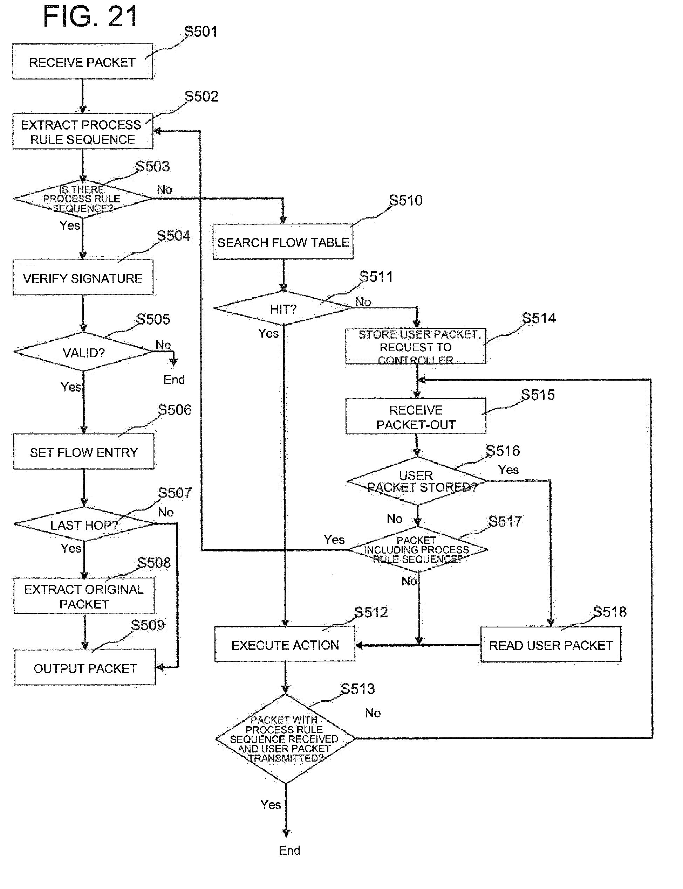

FIG. 21 is a flowchart showing an operation of the node 10b of the fourth exemplary embodiment. The operation of the node 10b is nearly identical to the case described using FIG. 16 where the setup packet (Setup Packet) and a user packet are transmitted separately except that the node 10b verifies a signature when a process rule sequence is included (step S504), and if the validity thereof cannot be confirmed, the packet is discarded (step S505).

According to the fourth exemplary embodiment of the present invention described above, it becomes possible to avoid an illegal process rule sequence setting a process rule (flow entry), and a more secure network can be built.

Further, the exemplary embodiment described above uses an asymmetric key, however, a common key may be used. In this case, appropriate modifications such as adding a function of updating the key can be made.

Further, a signature is generated and added to an entire process rule sequence in the exemplary embodiment described above, however, a configuration in which a signature is added to each piece of the process rule setting information or a modification such as having each node add or delete a signature every time it receives a packet is possible.

<Fifth Exemplary Embodiment>

Next, a fifth exemplary embodiment of the present invention solving the problem of packet loss in which a packet including a process rule sequence gets discarded in the middle of a path for some reason will be described. Since the present exemplary embodiment can be realized with the same configuration as the first to the fourth exemplary embodiments, a summary thereof will be described.

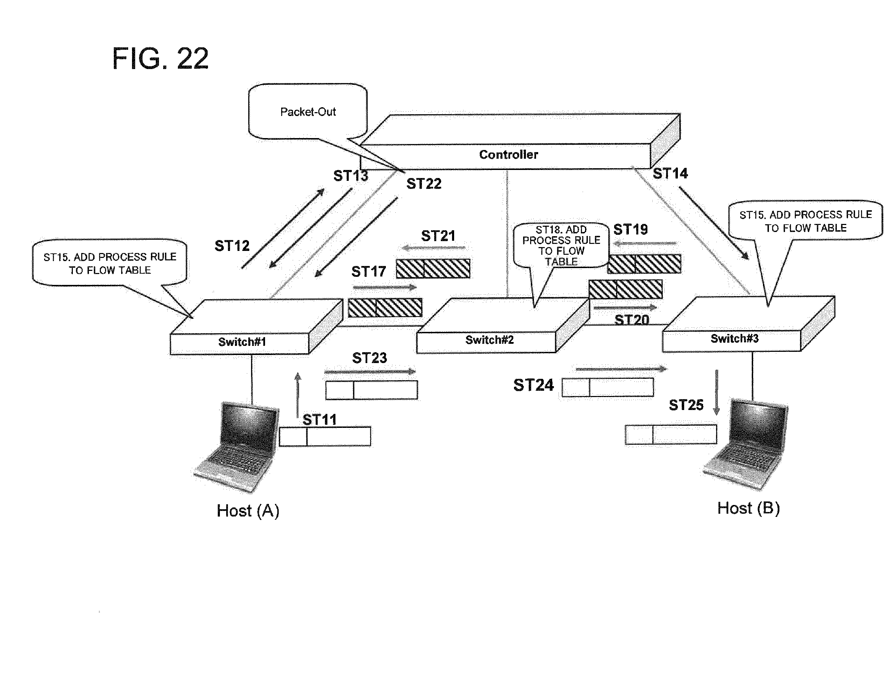

In the present exemplary embodiment, the controller transmits packets with a process rule sequence including a process rule that should be set in a single node from both the first hop and the last hop sides of a path and process rules (flow entries) are sequentially set bidirectionally, as shown in FIG. 22.

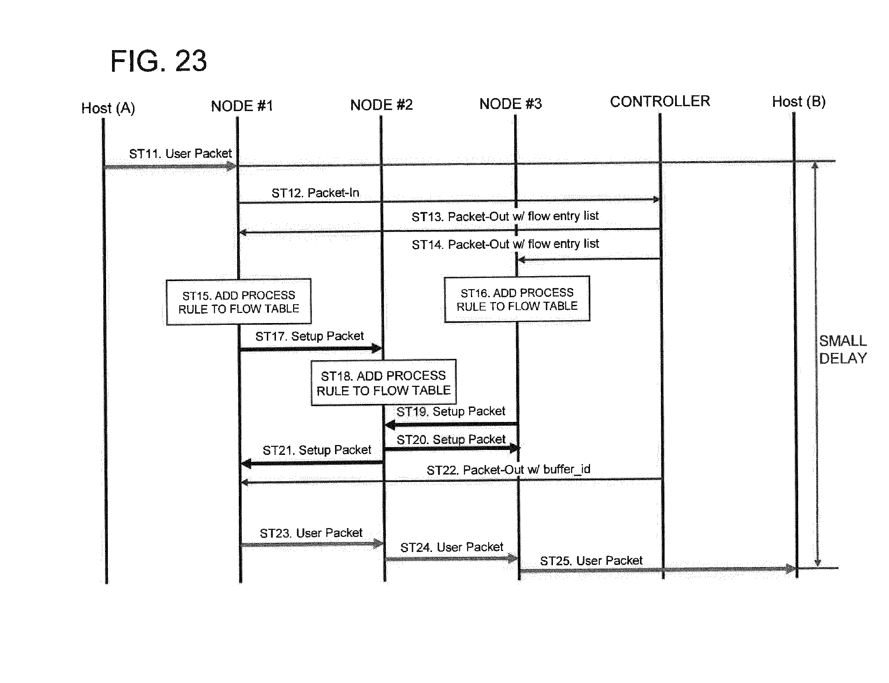

FIG. 23 is a sequence diagram showing a sequence of events in the present exemplary embodiment. As shown in FIG. 23, when receiving a user packet from Host (A) (ST11), Node #1 issues a request (to generate a process rule sequence; Packet-In) to the controller 20 (ST12).

Upon receiving the request (to generate a process rule sequence; Packet-In), the controller 20 generates a path and a process rule sequence according to the flowchart in FIG. 12, and transmits the setup packets (Setup packets) packaged in the packet output instructions (Packet-Out) to Node #1 of the first hop and Node #3 of the last hop on the path (ST13 and ST14). Further, the controller can also transmit the setup packets (Setup packets) to Nodes #1 and #3 via a data plane in the form of Ethernet (registered trademark) Frame, although this is not shown in FIGS. 22 and 23.

Upon receiving the setup packets (Setup Packets), Nodes #1 and #3 extract a process rule that should be set in own node, respectively, from the process rule sequence and set it (ST15 and ST16), and transmit the process rule to the next hops defined in the process rule sequence (ST17 and ST19).

Node #2, which has received the setup packet (Setup Packet), takes out a process rule (flow entry) that should be set therein from the process rule sequence included in the setup packet (Setup Packet), sets the process rule in the flow table 13 (ST18), and transmits the setup packet (Setup Packet) to a next hop (ST20 and ST21). Further, in the example in FIG. 23, since the setup packet (Setup Packet) from Node #1 is received before, processing by the setup packet from Node #3 is omitted.

Then, after the controller 20 transmits the packet output instruction (Packet-Out) to Node #1 (ST22), the user packet is transferred to Host (B) via Node #1, Node #2, and Node #3 (ST23 to ST25).

As described, according to the present exemplary embodiment, packet loss can be avoided and a process rule (flow entry) can be set more reliably in a node on a path because the setup packets (Setup Packets) including duplicated process rules (flow entries) are transmitted using a plurality of paths.

Further, in the present exemplary embodiment described above, packets including a process rule sequence are transmitted bidirectionally so as to generate an overlapping section, however, packets can be transmitted in one direction at certain time intervals or the controller can transmit packets including a process rule sequence while changing packet supply points.

Further, when there are many nodes on a path as stated in the third exemplary embodiment, process rules (flow entries) can be set in more nodes by transmitting packets including a process rule sequence in such a manner that a small number of overlapping sections are generated.

The exemplary embodiments of the present invention have been described above, however, the present invention is not limited to the above exemplary embodiments and further modifications, replacements, and adjustments can be added within the scope of the basic technological concept of the present invention. The controllers 20 and 20a of the exemplary embodiments above can be realized as dedicated servers, and the nodes 10, 10a, and 10b can be realized with OpenFlow switches mentioned above, routers on an IP network, and MPLS switches on an MPLS (Multi-Protocol Label Switching) network. The present invention can be applied to any network in which a server performs centralized management of nodes therewithin.

Further, in the exemplary embodiments described above, each node specifies a process rule (flow entry) that should be set therein from the node identifier (DPID) included in the process rule setting information in a process rule sequence, however, a method that uses the process rule setting information from the top or the end of a process rule sequence in order and flags used process rule setting information, or a method in which each node sequentially deletes used process rule setting information from a process rule sequence can be employed.

The disclosures of Non-Patent Documents are incorporated herein in their entirety by reference thereto. It should be noted that other objects, features and aspects of the present invention will become apparent in the entire disclosure and that modifications may be done without departing the gist and scope of the present invention as disclosed herein and claimed as appended herewith.

Also it should be noted that any combination of the disclosed and/or claimed elements, matters and/or items may fall under the modifications aforementioned.

Further, in the exemplary embodiments described above, a node of the last hop removes a process rule sequence header, however, a host may remove it as well.

Finally, preferred modes of the present invention will be summarized.

[Mode 1]

(Refer to the communication system according to the first aspect.)

[Mode 2]

In the communication system in Mode 1, the process rule sequence may include a plurality of process rules that a plurality of nodes on a data transfer network should set in a respective process rule storage unit.

[Mode 3]

In the communication system in Mode 1 or 2, each of the plurality of nodes may specify a process rule that should be set by each node based on a node identifier associated with each process rule in the process rule sequence.

[Mode 4]

In the communication system in any one of Modes 1 to 3, each of the plurality of nodes may transfer a packet with the process rule sequence based on output destination information attached to the process rule sequence.

[Mode 5]

In the communication system in any one of Modes 1 to 4, the packet may include information of a node of a last hop, and the node of the last hop may delete the process rule sequence or terminate the transfer of the packet.

[Mode 6]

In the communication system in any one of Modes 2, 4 and 5, a plurality of process rules in the process rule sequence may be arranged in the order of nodes on a transfer path of the packet, and each of the plurality of nodes may specify a process rule that should be set therein by sequentially deleting from the packet a process rule already set in the process rule storage unit of own node or writing into a predetermined region of the packet that the process rule is already used.

[Mode 7]

In the communication system in any one of Modes 1 to 6, the process rule sequence may be added to a user packet in a form of an additional header.

[Mode 8]

In the communication system in any one of Modes 1 to 7, an electronic signature validating the process rule sequence or each of the plurality of process rules is added to the packet; and

each of the plurality of nodes may verify validity of an electronic signature of the process rule sequence or each of the plurality of process rules and set the process rule when the validity is confirmed.

[Mode 9]

The communication system in any one of Modes 1 to 8 may comprise a controller that generates the process rule sequence or a packet with the process rule sequence and transmits the process rule sequence or the packet with the process rule sequence to a node that is a starting point of the packet with the process rule sequence.

[Mode 10]

In he communication system in any one of Modes 1 to 9, the controller may generate a process rule sequence including a process rule that should be set in a single node or a packet with a process rule sequence that should be set in the single node and transmit the process rule sequence or the packet to a plurality of nodes on a path of the packet.

[Mode 11]

(Refer to the node according to the second aspect.)

[Mode 12]

In the node in Mode 11, the process rule sequence may include a plurality of process rules that a plurality of nodes on a data transfer network should set in a process rule storage unit of a respective node.

[Mode 13]

The node in Modes 11 and 12 may specify a process rule that should be set in the own node based on a node identifier associated with each of the plurality of process rules in the process rule sequence.

[Mode 14]

The node in any one of Modes 11 to 13 may transfer a packet with the process rule sequence based on output destination information attached to the process rule sequence.

[Mode 15]

The node in any one of Modes 11 to 14 may delete the process rule sequence or terminate transfer of the packet when the information of a node of the last hop included in the packet indicates that the own node is a node of a last hop.

[Mode 16]

In the node in any one of Modes 12, 14, and 15, the plurality of process rules included in the process rule sequence are arranged in the order of nodes on a transfer path of the packet, and each of the plurality of nodes specifies a process rule that should be set therein by sequentially deleting a process rule from the process rule sequence or writing into a predetermined region of the packet that the process rule is already used.

[Mode 17]

The node in any one of Modes 11 to 16 may extract a process rule that should be set in a process rule storage unit thereof from a process rule sequence stored in an additional header added to a user packet and set the process rule therein.

[Mode 18]

The node In any one of Modes 11 to 17 may verify validity of an electronic signature of the process rule sequence added to the packet or a process rule that should be set in the own node, and set the process rule when the validity is confirmed.

[Mode 19]

(Refer to the control server according to the third aspect.)

[Mode 20]

The control server in Mode 19 may generate a process rule sequence including a plurality of process rules that a plurality of nodes on a data transfer network should set in a process rule storage unit of own node.

[Mode 21]

The control server in Modes 19 and 20 may transmit a packet associating a process rule with a node identifier of the node in which the process rule should be set as the process rule sequence.

[Mode 22]

The control server in any one of Modes 19 to 21 may attach to the process rule sequence output destination information indicating a transfer destination of a packet with the process rule sequence.

[Mode 23]

The control server in any one of Modes 19 to 22 may transmit a packet including information for causing a node of a last hop to delete the process rule sequence or terminate transfer of the packet.

[Mode 24]

The control server in any one of Modes 20, 22, and 23 may generate a process rule sequence in which a plurality of process rules are arranged in the order of nodes on a transfer path of the packet.

[Mode 25]

The control server in any one of Modes 19 to 24 may add the process rule sequence to a user packet in a form of an additional header.

[Mode 26]

The control server in any one of Modes 19 to 25 may transmit a packet to which an electronic signature indicating validity of the process rule sequence or each of the plurality of process rules is added.

[Mode 27]

The control server in any one of Modes 19 to 26 may generate a process rule sequence including a process rule that should be set in a single node or a packet with a process rule sequence that should be set in the single node and transmit the process rule sequence or the packet to a plurality of nodes on a path of the packet.

[Mode 28]

(Refer to the communication method according to the fourth aspect.)

[Mode 29]

(Refer to the program according to the fifth aspect.)

[Mode 30]

(Refer to the program according to the sixth aspect.)

EXPLANATIONS OF SYMBOLS

| 10, 10a, 10b: | node |
| 11: | controller communication unit |
| 12: | flow table management unit |
| 13: | flow table |
| 14: | packet buffer |
| 15: | transfer processing unit |
| 20, 20a: | controller |

| | |
|---|---|
| 21: | flow entry database (flow entry DB) |
| 22: | topology management unit |
| 23: | path/action calculation unit |
| 24: | flow entry management unit |
| 25: | control message processing unit |
| 26: | node communication unit |
| 31: | user packet |
| 32: | packet with a process rule sequence header |
| 33, 33a: | process rule sequence header |
| 151: | flow setting information processing unit |
| 152: | flow setting information extraction unit |
| 153: | table search unit |
| 154: | action execution unit |
| 155: | packet delay unit |
| 156: | signature verification unit |
| 251: | message analysis/processing unit |
| 252: | message generation unit |
| 253: | flow entry aggregation unit |
| 254: | signature generation unit |

**Claims**

1. A communication system, comprising a node that receives a packet with a process rule sequence including a plurality of process rules that should be set in a process rule storage unit of a node on a data transfer network, extracts a process rule that should be set in a process rule storage unit of own node from the process rule sequence, and sets the process rule therein.

2. The communication system as defined in claim 1, wherein the process rule sequence includes a plurality of process rules that a plurality of nodes on a data transfer network should set in a respective process rule storage unit.

3. The communication system as defined in claim 1 or 2, wherein each of the plurality of nodes specifies a process rule that should be set by each node based on a node identifier associated with each process rule in the process rule sequence.

4. The communication system as defined in any one of claims 1 to 3, wherein each of the plurality of nodes transfers a packet with the process rule sequence based on output destination information attached to the process rule sequence.

5. The communication system as defined in any one of claims 1 to 4, wherein the packet includes information of a node of a last hop, and the node of the last hop deletes the process rule sequence or terminates transfer of the packet.

6. The communication system as defined in any one of claims 2, 4, and 5, wherein a plurality of process rules included in the process rule sequence are arranged in the order of nodes on a transfer path of the packet,
and each of the plurality of nodes specifies a process rule that should be set therein by sequentially deleting from the packet a process rule already set in the process rule storage unit of own node or writing into a predetermined region of the packet that the process rule is already used.

7. The communication system as defined in any one of claims 1 to 6, wherein the process rule sequence is added to a user packet in a form of an additional header.

8. The communication system as defined in any one of claims 1 to 7, wherein an electronic signature validating the process rule sequence or each of the plurality of process rules is added to the packet; and
each of the plurality of nodes verifies validity of an electronic signature of the process rule sequence or each of the plurality of process rules and sets the process rule when the validity is confirmed.

9. The communication system as defined in any one of claims 1 to 8, comprising a controller that generates the process rule sequence or a packet with the process rule sequence and transmits the process rule sequence or the packet with the process rule sequence to a node that is a starting point of the packet with the process rule sequence.

10. The communication system as defined in claims 9, wherein the controller generates a process rule sequence including a process rule that should be set in a single node or a packet with a process rule sequence that should be set in the single node, and transmits the process rule sequence or the packet to a plurality of nodes on a path of the packet.

11. A node disposed on a data transfer network, receiving a packet with a process rule sequence including a plurality of process rules that should be set in a process rule storage unit of a node on the data transfer network, extracting a process rule that should be set in a process rule storage unit of own node from the process rule sequence, and setting the process rule therein.

12. The node as defined in claim 11, wherein the process rule sequence includes a plurality of process rules that a plurality of nodes on a data transfer network should set in a process rule storage unit of a respective node.

13. The node as defined in claim 11 or 12, specifying a process rule that should be set in the own node based on a node identifier associated with each of the plurality of process rules in the process rule sequence.

14. The node as defined in any one of claims 11 to 13, transferring a packet with the process rule sequence based on output destination information attached to the process rule sequence.

15. The node as defined in any one of claims 11 to 14, deleting the process rule sequence or terminates transfer of the packet when the information of a node of the last hop included in the packet indicates that the own node is a node of a last hop.

16. The node as defined in any one of claims 12, 14, and 15, wherein the plurality of process rules included in the process rule sequence are arranged in the order of a plurality of nodes on a transfer path of the packet, and each of the plurality of nodes specifies a process rule that should be set therein by sequentially deleting a process rule from the process rule sequence or writing into a predetermined region of the packet that the process rule is already used.

17. The node as defined in any one of claims 11 to 16, extracting a process rule that should be set in a process rule storage unit thereof from a process rule sequence stored in an additional header added to a user packet and setting the process rule therein.

18. The node as defined in any one of claims 11 to 17, verifying validity of an electronic signature of the process rule sequence added to the packet or a process rule that should be set in the own node, and setting the process rule when the validity is confirmed.

19. A control server that generates a process rule sequence including a plurality of process rules that should be set in a process rule storage unit of a node on a data transfer network based on information included in an input packet received from a node disposed on the data transfer network, and transmits a packet with the process rule sequence to the node transmitting the input packet.

20. The control server as defined in claim 19, generating a process rule sequence including a plurality of process rules that a plurality of nodes on the data transfer network should set in a process rule storage unit of own node.

21. The control server as defined in claim 19 or 20, transmitting a packet associating a process rule with a node identifier of the node in which the process rule should be set as the process rule sequence.

22. The control server as defined in any one of claims 19 to 21, attaching to the process rule sequence output destination information indicating a transfer destination of a packet with the process rule sequence.

23. The control server as defined in any one of claims 19 to 22, transmitting a packet including information for causing a node of a last hop to delete the process rule sequence or terminate transfer of the packet.

24. The control server as defined in any one of claims 20, 22, and 23, generating a process rule sequence in which a plurality of process rules are arranged in the order of nodes on a transfer path of the packet.

25. The control server as defined in any one of claims 19 to 24, adding the process rule sequence to a user packet in a form of an additional header.

26. The control server as defined in any one of claims 19 to 25, transmitting a packet to which an electronic signature indicating validity of the process rule sequence or each of the plurality of process rules is added.

27. The control server as defined in any one of claims 19 to 26, that generates a process rule sequence including a process rule that should be set in a single node or a packet with a process rule sequence that should be set in the single node, and
transmits the process rule sequence or the packet to a plurality of nodes on a path of the packet.

28. A communication method, comprising:

inserting in an input packet a process rule sequence including a plurality of process rules that should be set in a process rule storage unit of a node on a data transfer network; and
by the node on the data transfer network, extracting a process rule that should be set in a process rule storage unit of own node from the process rule sequence included in the input packet and setting the process rule therein.

29. A communication method, comprising:

by a node on a data transfer network, receiving a packet with a process rule sequence including a plurality of process rules that should be set in a process rule storage unit of a node on the data transfer network; and
by the node, extracting a process rule that should be set in a process rule storage unit of own node from a process rule sequence included in the input packet, and setting the process rule therein.

30. A communication method, comprising:

by a controller that controls nodes disposed on a data transfer network, inserting in an input packet a process rule sequence including a plurality of process rules that should be set in a process rule storage unit of a node on the data transfer network; and
by the controller, transmitting a packet with the process rule sequence to a node on the data transfer network.

31. A program causing a computer that constitutes a node disposed on a data transfer network to execute:

receiving a packet with a process rule sequence including a plurality of process rules that should be set in a process rule storage unit of a node on the data transfer network and extracting a process rule that should be set in a process rule storage unit of own node from the process rule sequence; and
setting the extracted process rule in a process rule storage unit of the own node.

32. A program causing a computer that constitutes a controller controlling a node disposed on a data transfer network to execute:

generating a process rule sequence including a plurality of process rules that should be set in each process rule storage unit of nodes on the data transfer network based on information included in an input packet received from a node disposed on the data transfer network; and
transmitting a packet with the process rule sequence to the node transmitting the input packet.

# FIG. 1

# FIG. 2

CONTROLLER

**NODE** — 10

CONTROLLER COMMUNICATION UNIT — 11

FLOW TABLE MANAGEMENT UNIT — 12

FLOW TABLE — 13

PACKET BUFFER — 14

TRANSFER PROCESSING UNIT — 15

FLOW SETTING INFORMATION PROCESSING UNIT — 151

FLOW SETTING INFORMATION EXTRACTION UNIT — 152

TABLE SEARCH UNIT — 153

ACTION EXECUTION UNIT — 154

USER TRAFFIC

EP 2 549 692 A1

# FIG. 3

CONTROLLER 20

| FLOW ENTRY DB | 21 |

| FLOW ENTRY MANAGEMENT UNIT | 24 |

TOPOLOGY MANAGEMENT UNIT 22

PATH/ACTION CALCULATION UNIT 23

CONTROL MESSAGE PROCESSING UNIT 25

MESSAGE ANALYSIS/ PROCESSING UNIT 251

MESSAGE GENERATION UNIT 252

FLOW ENTRY AGGREGATION UNIT 253

NODE COMMUNICATION UNIT 26

NODE

# FIG. 4

| MAC DA | MAC SA | TPID | VLAN | Ether Type | Payload |
|---|---|---|---|---|---|

31

| MAC DA | MAC SA | Ether Type | PROCESS RULE SEQUENCE | MAC DA | MAC SA | TPID | VLAN | Ether Type | Payload |
|---|---|---|---|---|---|---|---|---|---|

32

33; PROCESS RULE SEQUENCE HEADER

EP 2 549 692 A1

## FIG. 5

| 0 | | 31 |
|---|---|---|
| MAC DA | | |
| MAC DA (cont.) | MAC SA | |
| MAC SA (cont.) | | |
| Ether Type | Total Length | |
| Last hop bitmap | | |
| Length | | |
| DPID#1 | | |
| ofp_match | | |
| command | idle_timeout | |
| hard_timeout | priority | |
| buffer_id | | |
| out_port | flags | |
| actions | | |
| Output port bitmap | | |

NODE IDENTIFIER

FLOW ENTRY OPERATION INFORMATION

OUTPUT PORT BITMAP

# FIG. 6

# FIG. 7

S001 — RECEIVE PACKET-IN

S002 — OBTAIN TOPOLOGY/ CALCULATE PATH

S003 — POSSIBLE TO CREATE PATH?
No → End
Yes ↓

S004 — CALCULATE ACTION

S005 — GENERATE FLOW ENTRY

S006 — AGGREGATE FLOW ENTRY (CREATE PROCESS RULE SEQUENCE)

S007 — GENERATE FlowMod (Add)

S008 — TRANSMIT FlowMod (Add)

S009 — BUFFERED?
Yes → End
No ↓

S010 — TRANSMIT PACKET-OUT

# FIG. 8

EP 2 549 692 A1

Host (A)    NODE #1    NODE #2    CONTROLLER    Host (B)

CONTROLLER

ST3

ST4. ADD PROCESS RULE SEQUENCE TO USER PACKET

ST6. ADD PROCESS RULE SEQUENCE TO FLOW TABLE, DELETE PROCESS RULE SEQUENCE

ST2

NODE #1    NODE #2

ST5

ST1   PROCESS RULE SEQUENCE

ST7

Host (A)    Host (B)

ST1. User Packet

ST2. Packet-In

ST3. FlowMod (Add) /W PROCESS RULE SEQUENCE

ST4. ADD PROCESS RULE SEQUENCE TO USER PACKET

ST5. USER PACKET /W PROCESS RULE SEQUENCE

ST6. ADD PROCESS RULE SEQUENCE TO FLOW TABLE, DELETE PROCESS RULE SEQUENCE

ST7. User Packet

SMALL DELAY

# FIG. 9

EP 2 549 692 A1

# FIG. 10

**ST1** | MAC DA | MAC SA | TPID | VLAN | Ether Type | Payload |

_31_

**ST3** | MAC DA | MAC SA | Ether Type | PROCESS RULE SEQUENCE | MAC DA | MAC SA | TPID | VLAN | Ether Type | Payload |

_32_

33; PROCESS RULE SEQUENCE HEADER

**ST5** | MAC DA | MAC SA | Ether Type | PROCESS RULE SEQUENCE | MAC DA | MAC SA | TPID | VLAN | Ether Type | Payload |

_32_

33; PROCESS RULE SEQUENCE HEADER

**ST7** | MAC DA | MAC SA | TPID | VLAN | Ether Type | Payload |

_31_

EP 2 549 692 A1

# FIG. 11

EP 2 549 692 A1

```
0                                    31
01000000000000000000000000000000
```

NODE OF DPID#2 IS THE LAST HOP

| 0 | | 31 |
|---|---|---|
| MAC DA | | |
| MAC DA (cont.) | | MAC SA |
| MAC SA (cont.) | | |
| Ether Type | | Total Length |
| Last hop bitmap | | |
| Length | | |
| DPID#1 | | | ← NODE IDENTIFIER |
| ofp_match | | |
| command | | idle_timeout |
| hard_timeout | | priority |
| buffer_id | | |
| out_port | | flags |
| actions | | |

FLOW ENTRY OPERATION INFORMATION

| Output port bitmap | ← OUTPUT PORT BITMAP |
|---|---|

| Length |
|---|
| DPID#2 | ← NODE IDENTIFIER |
| ofp_match |
| command | idle_timeout |
| hard_timeout | priority |
| buffer_id |
| out_port | flags |
| actions |

FLOW ENTRY OPERATION INFORMATION

| Output port bitmap | ← OUTPUT PORT BITMAP |
|---|---|

# FIG. 12

```
                    ┌──────────────────────┐   S201
                    │   RECEIVE PACKET-IN   │
                    └──────────────────────┘
                               │
                               ▼
                    ┌──────────────────────┐   S202
                    │   OBTAIN TOPOLOGY/    │
                    │   CALCULATE PATH      │
                    └──────────────────────┘
                               │
                               ▼
            No         ◇ POSSIBLE TO ◇          S203
        ◄──────────────  CREATE PATH?
                           ◇     ◇
        │                    Yes
        ▼                    │
       End                   ▼
                    ┌──────────────────────┐   S204
                    │   CALCULATE ACTION    │
                    └──────────────────────┘
                               │
                               ▼
                    ┌──────────────────────┐   S205
                    │  GENERATE FLOW ENTRY  │
                    └──────────────────────┘
                               │
                               ▼
                    ┌──────────────────────┐   S206
                    │ AGGREGATE FLOW ENTRY  │
                    └──────────────────────┘
                               │
                               ▼
                    ┌──────────────────────┐   S207
                    │  MODIFY USER PACKET   │
                    │  (ADD PROCESS         │
                    │   RULE SEQUENCE)      │
                    └──────────────────────┘
                               │
                               ▼
                    ┌──────────────────────┐   S208
                    │ TRANSMIT PACKET-OUT OR│
                    │   ETHERNET FRAME      │
                    └──────────────────────┘
```

# FIG. 13

S301 — RECEIVE PACKET

S302 — EXTRACT PROCESS RULE SEQUENCE

S303 — IS THERE PROCESS RULE SEQUENCE?
No
Yes

S308 — SEARCH FLOW TABLE

S304 — SET FLOW ENTRY

S309 — HIT?
No
Yes

S305 — LAST HOP?
No
Yes

S312 — STORE USER PACKET, REQUEST TO CONTROLLER

S306 — EXTRACT ORIGINAL PACKET

S313 — RECEIVE PACKET-OUT

S307 — OUTPUT PACKET

S314 — USER PACKET STORED?
Yes
No

S315 — PACKET INCLUDING PROCESS RULE SEQUENCE?
Yes
No

S310 — EXECUTE ACTION

S316 — READ USER PACKET

S311 — PACKET INCLUDING PROCESS RULE SEQUENCE RECEIVED?
No
Yes

# FIG. 14

EP 2 549 692 A1

# FIG. 15

CONTROLLER

**NODE** 10a

| 11 | 12 | 13 | 14 |
|---|---|---|---|
| CONTROLLER COMMUNICATION UNIT | FLOW TABLE MANAGEMENT UNIT | FLOW TABLE | PACKET BUFFER |

TRANSFER PROCESSING UNIT — 15

FLOW SETTING INFORMATION PROCESSING UNIT — 151

FLOW SETTING INFORMATION EXTRACTION UNIT — 152

PACKET DELAY UNIT — 155

TABLE SEARCH UNIT — 153

ACTION EXECUTION UNIT — 154

USER TRAFFIC

EP 2 549 692 A1

# FIG. 16

RECEIVE PACKET — S301

EXTRACT PROCESS RULE SEQUENCE — S302

S303 — IS THERE PROCESS RULE SEQUENCE?

Yes

No

SET FLOW ENTRY — S304

LAST HOP? — S305

No

Yes

EXTRACT ORIGINAL PACKET — S306

OUTPUT PACKET — S307

SEARCH FLOW TABLE — S308

HIT? — S309

Yes

No

STORE USER PACKET, REQUEST TO CONTROLLER — S312

RECEIVE PACKET-OUT — S313

USER PACKET STORED? — S314

Yes

No

PACKET INCLUDING PROCESS RULE SEQUENCE? — S315

Yes

No

EXECUTE ACTION — S310

READ USER PACKET — S316

SETUP PACKET RECEIVED AND USER PACKET TRANSMITTED? — S311a

No

Yes

End

EP 2 549 692 A1

FIG. 17

CONTROLLER

10b

NODE

11 — CONTROLLER COMMUNICATION UNIT

12 — FLOW TABLE MANAGEMENT UNIT

13 — FLOW TABLE

PACKET BUFFER — 14

15

156 — SIGNATURE VERIFICATION UNIT

151 — FLOW SETTING INFORMATION PROCESSING UNIT

153 — TABLE SEARCH UNIT

154 — ACTION EXECUTION UNIT

TRANSFER PROCESSING UNIT

FLOW SETTING INFORMATION EXTRACTION UNIT — 152

PACKET DELAY UNIT — 155

USER TRAFFIC

# FIG. 18

CONTROLLER                                                                                            20a
                                                                                                      21

FLOW ENTRY DB

                                                                                                      24

| TOPOLOGY MANAGEMENT UNIT | 22 | PATH/ACTION CALCULATION UNIT | 23 | FLOW ENTRY MANAGEMENT UNIT |

CONTROL MESSAGE PROCESSING UNIT                25                    251          252        254       253

MESSAGE ANALYSIS/ PROCESSING UNIT    |    MESSAGE GENERATION UNIT    |    SIGNATURE GENERATION UNIT    |    FLOW ENTRY AGGREGATION UNIT

                                                                                                      26

NODE COMMUNICATION UNIT

ノード

EP 2 549 692 A1

# FIG. 19

| 0 | | 31 |
|---|---|---|
| MAC DA | | |
| MAC DA (cont.) | MAC SA | |
| MAC SA (cont.) | | |
| Ether Type | Total Length | |
| Last hop bitmap | | |
| Length | | |
| DPID#1 | | |
| ofp_match | | |
| command | idle_timeout | |
| hard_timeout | priority | |
| buffer_id | | |
| out_port | flags | |
| actions | | |
| Output port bitmap | | |
| Length | | |
| DPID#2 | | |
| ofp_match | | |
| command | idle_timeout | |
| hard_timeout | priority | |
| buffer_id | | |
| out_port | flags | |
| actions | | |
| Output port bitmap | | |
| Signature | | |

33a

SWITCH ID

FLOW ENTRY OPERATION INFORMATION

OUTPUT PORT

SIGNATURE-RELATED RANGE

SIGNATURE BY CONTROLLER PRIVATE KEY

EP 2 549 692 A1

# FIG. 20

```
RECEIVE PACKET-IN                          S401

OBTAIN TOPOLOGY/
CALCULATE PATH                             S402

POSSIBLE TO
No ←── CREATE PATH?                         S403
        Yes
End

CALCULATE ACTION                           S404

GENERATE FLOW ENTRY                        S405

AGGREGATE FLOW ENTRY
(CREATE PROCESS                            S406
RULE SEQUENCE)

SIGNATURE                                  S407

GENERATE PACKET-OUT
(FLOW SETTING)                             S408

TRANSMIT PACKET-OUT
(FLOW SETTING)                             S409

TRANSMIT PACKET-OUT
(USER PACKET)                              S410
```

# FIG. 21

S501

RECEIVE PACKET

S502

EXTRACT PROCESS
RULE SEQUENCE

S503

IS THERE
PROCESS RULE
SEQUENCE?

No

Yes

S510

SEARCH FLOW TABLE

S504

VERIFY SIGNATURE

S511

HIT?

No

Yes

S514

STORE USER PACKET,
REQUEST TO
CONTROLLER

S505

VALID?

No

Yes

End

S515

RECEIVE
PACKET-OUT

S506

SET FLOW ENTRY

S516

USER
PACKET STORED?

Yes

No

S507

LAST HOP?

No

Yes

S517

PACKET
INCLUDING PROCESS
RULE SEQUENCE?

Yes

No

S508

EXTRACT ORIGINAL
PACKET

S518

READ USER PACKET

S509

OUTPUT PACKET

S512

EXECUTE ACTION

S513

PACKET WITH
PROCESS RULE
SEQUENCE RECEIVED
AND USER PACKET
TRANSMITTED?

No

Yes

End

# FIG. 22

EP 2 549 692 A1

# FIG. 23

Host (A) | NODE #1 | NODE #2 | NODE #3 | CONTROLLER | Host (B)

ST11. User Packet

ST12. Packet-In

ST13. Packet-Out w/ flow entry list

ST14. Packet-Out w/ flow entry list

ST15. ADD PROCESS RULE TO FLOW TABLE

ST16. ADD PROCESS RULE TO FLOW TABLE

ST17. Setup Packet

ST18. ADD PROCESS RULE TO FLOW TABLE

ST19. Setup Packet

ST20. Setup Packet

ST21. Setup Packet

ST22. Packet-Out w/ buffer_id

ST23. User Packet

ST24. User Packet

ST25. User Packet

SMALL DELAY

EP 2 549 692 A1

# FIG. 24

## Flow Key

| Wildcards | In Port | Ether SA | Ether DA | Ether type | VLAN ID | VLAN PCP | IP SA | IP DA | IP proto | TCP/UDP src port | TCP/UDP dst port | Actions | Stats |
|---|---|---|---|---|---|---|---|---|---|---|---|---|---|

# FIG. 25

| ACTIONS | CONTENTS |
| --- | --- |
| OUTPUT | OUTPUT TO DESIGNATED PORT |
| SET_VLAN_VID | ADD/UPDATE VLAN Tag WITH THE SPECIFIED VLAN ID |
| SET_VLAN_PCP | ADD/UPDATE VLAN Tag WITH THE SPECIFIED VLAN Priority |
| STRIP_VLAN | STRIP IEE802.1q VLAN Tag |
| SET_DL_SRC | UPDATE MAC SA |
| SET_DL_DST | UPDATE MAC DA |
| SET_NW_SRC | UPDATE IP SA |
| SET_NW_DST | UPDATE IP DA |
| SET_TP_SRC | UPDATE TCP/UDP Source Port |
| SET_TP_DST | UPDATE TCP/UDP Destination Port |
| VENDOR | VENDOR DEFINED ACTION |

EP 2 549 692 A1

FIG. 26

<table>
<tr><td colspan="2"><strong>INTERNATIONAL SEARCH REPORT</strong></td><td>International application No.<br>PCT/JP2011/056200</td></tr>
</table>

| A. CLASSIFICATION OF SUBJECT MATTER |
|---|
| H04L12/56(2006.01)i |
| According to International Patent Classification (IPC) or to both national classification and IPC |

| B. FIELDS SEARCHED |
|---|
| Minimum documentation searched (classification system followed by classification symbols)<br>H04L12/56 |
| Documentation searched other than minimum documentation to the extent that such documents are included in the fields searched<br>Jitsuyo Shinan Koho 1922-1996 Jitsuyo Shinan Toroku Koho 1996-2011<br>Kokai Jitsuyo Shinan Koho 1971-2011 Toroku Jitsuyo Shinan Koho 1994-2011 |
| Electronic data base consulted during the international search (name of data base and, where practicable, search terms used) |

C. DOCUMENTS CONSIDERED TO BE RELEVANT

| Category* | Citation of document, with indication, where appropriate, of the relevant passages | Relevant to claim No. |
|---|---|---|
| X<br><br><br><br>Y | JP 11-341060 A (Fuji Electric Co., Ltd.),<br>10 December 1999 (10.12.1999),<br>paragraphs [0016] to [0067]; fig. 1 to 5<br>(Family: none) | 1,2,4,5,7,8,<br>11,12,14,15,<br>17,18,28,29,<br>31<br>3,6,9,10,13,<br>16,19-27,30,<br>32 |
| Y | JP 6-338907 A (NEC Corp.),<br>06 December 1994 (06.12.1994),<br>paragraph [0020]; fig. 1, 2<br>& US 5473603 A & CA 2124760 A<br>& CA 2124760 A1 | 3,13 |

[X] Further documents are listed in the continuation of Box C.  [ ] See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>29 March, 2011 (29.03.11) | Date of mailing of the international search report<br>12 April, 2011 (12.04.11) |
|---|---|
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

| International application No. |
| --- |
| PCT/JP2011/056200 |

C (Continuation).    DOCUMENTS CONSIDERED TO BE RELEVANT

| Category* | Citation of document, with indication, where appropriate, of the relevant passages | Relevant to claim No. |
| --- | --- | --- |
| Y | JP 2002-198989 A  (Yaskawa Electric Corp.), 12 July 2002 (12.07.2002), paragraphs [0050] to [0060]; fig. 4 (Family: none) | 6,16 |
| Y | JP 2004-80637 A  (NEC Corp.), 11 March 2004 (11.03.2004), paragraphs [0039] to [0044] (Family: none) | 9,10,19-27, 30,32 |

Form PCT/ISA/210 (continuation of second sheet) (July 2009)

**EP 2 549 692 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2010060898 A

### Non-patent literature cited in the description

- **MCKEOWN, NICK et al.** *OpenFlow: Enabling Innovation in Campus Networks,* 26 February 2010, URL : http://www.openflowswitch.org//documents/openflow-wp-latest.pdf>

- *OpenFlow Switch Specification,* 26 February 2010, URL : http://www.openflowswitch.org/documents/openflow-spec-v0.9.0.pdf>